# EUROPEAN PATENT APPLICATION

(11) **EP 4 811 868 A1**
(43) Date of publication of application: **23.09.2026**
(21) Application number: 23958474.1
(22) Date of filing: 13.11.2023
(51) Int. Cl.: H04W 40/22

(54) **RELAY COMMUNICATION METHOD**

(71) Applicant: Shenzhen TCL New Technology Co., Ltd., Shenzhen, Guangdong 518052 (CN)
(72) Inventor: ZHOU, Pei, Shenzhen, Guangdong 518052 (CN); TANG, Xiaoyong, Shenzhen, Guangdong 518052 (CN)
(74) Representative: Murgitroyd & Company
(86) International application number: PCT/CN2023/131145
(87) International publication number: WO 2025/102186

(57) **Abstract**

A relay communication method, including: relay station discovery, RSSl measurements related to relay stations, selection of appropriate relay stations, channel sounding and feedback of the relay stations, BSR design and feedback of the relay stations, transmission and scheduling of the relay stations, and relay station transmission supporting multi-link capability.

## Description

### TECHNICAL FIELD

The present application relates to the field of wireless communication technologies, and in particular, to a relay communication method.

### BACKGROUND

In the existing 802.11 series of standards, a scenario is generally considered where an access point (AP) and one or more associated stations (STAs) perform direct communication. However, when a STA is far from the AP, the communication link quality (for example, SNR or SINR) may be poor due to large path loss or severe interference, thereby affecting the communication rate.

In the Project Authorization (PARs) document for Ultra High Reliability (UHR), improvements will be made to the Physical layer (PHY) and Medium Access Control (MAC) layer of IEEE Std 802.11 in independent Basic Service Set (BSS) or overlapping BSS scenarios, such that at least one operating mode is capable of achieving a higher throughput than Extremely High Throughput (EHT) at different signal-to-interference-plus-noise ratio (SINR) levels.

Therefore, in Wi-Fi 8, improving the throughput of distant users by using relay stations has become a research focus, and how to design an efficient relay protocol is a problem that needs to be solved.

### TECHNICAL PROBLEM

The prior art does not provide a specific relay operation protocol or frame design, nor does it propose how a Multi-Link Device (MLD) can act as a relay station. The prior art does not disclose a method centered on the communication between an AP and a target non-AP STA for selecting a suitable relay station to better complete the communication from the AP to the non-AP STA. The new generation of Wireless Local Area Networks (WLANs) requires a more comprehensive and detailed design.

Therefore, there is a need for a relay communication method that improves relay station-related operations.

### SUMMARY

An object of the present disclosure is to provide a relay communication method, a user equipment, and a base station.

In a first aspect, the present disclosure provides a relay communication method performed at a station (STA) in a wireless local area network, the method comprising:
transmitting a first request frame to an access point (AP), wherein the first request frame comprises an Extended Capabilities element and/or a UHR Relay Capabilities element, the Extended Capabilities element comprises a relay station subfield for indicating whether relay forwarding is supported, and the UHR Relay Capabilities element comprises a UHR relay capability information field.

In a second aspect, the present disclosure provides a relay communication method performed at an access point (AP) in a wireless local area network, the method comprising:
receiving a first request frame transmitted from a station (STA), wherein the first request frame comprises an Extended Capabilities element and/or a UHR Relay Capabilities element, the Extended Capabilities element comprises a relay station subfield for indicating whether relay forwarding is supported, and the UHR Relay Capabilities element comprises a UHR relay capability information field.

In a third aspect, the present disclosure provides a relay communication method performed at a first station in a wireless local area network, the method comprising:
transmitting, by the first station, a frame for a Received Signal Strength Indicator (RSSI) measurement to one or more relay stations, wherein the frame is a trigger frame for triggering an RSSI measurement of the one or more relay stations, or a Null Data Packet Announcement (NDPA) frame and a Null Data Packet (NDP) frame for providing the RSSI measurement.

In a fourth aspect, the present disclosure provides a relay communication method performed at a first station in a wireless local area network, the method comprising:
transmitting, by the first station, a frame to a second station via forwarding by one or more relay stations, wherein the frame comprises identifier information of a selected relay station among the one or more relay stations.

In a fifth aspect, the present disclosure provides a relay communication method performed at a station in a wireless local area network that acts as a relay station, the method comprising:
reporting a Buffer Status Report (BSR) to an access point (AP), wherein the BSR comprises a first field for recording a first BSR of the relay station and a second field for recording a second BSR of a destination device served by the relay station.

In a sixth aspect, the present disclosure provides a relay communication method performed at a station in a wireless local area network that acts as a relay station, wherein the multi-link capable relay station performs a multi-link relay station/forwarding operation, wherein a first link of the multi-link is used for receiving a frame from an access point (AP) or transmitting a frame to the AP, and a second link of the multi-link is used for receiving a frame from a station (STA) or transmitting a frame to the STA, the relay station is a multi-link device (MLD) having a simultaneous transmit and receive (STR) capability on multiple links, and the method further comprises:
receiving a first data frame sent from the AP via the first link; and
performing a first simultaneous transmission according to the STR capability, wherein the first simultaneous transmission comprises transmitting, via the first link, a first acknowledgement frame to the AP to acknowledge receipt of the first data frame, and forwarding, via the second link, the first data frame to the STA.

In a seventh aspect, the present disclosure provides a relay communication method performed at a station in a wireless local area network that acts as a relay station, wherein the multi-link capable relay station performs a multi-link relay station/forwarding operation, wherein a first link of the multi-link is used for receiving a frame from an access point (AP) or transmitting a frame to the AP, and a second link of the multi-link is used for receiving a frame from a station (STA) or transmitting a frame to the STA, wherein the relay station is a multi-link device (MLD) having a non-simultaneous transmit and receive (NSTR) capability, the method comprising:
performing a first simultaneous transmission according to the NSTR capability, wherein the first simultaneous transmission comprises: transmitting a sync frame to the AP and the STA, respectively, for maintaining synchronization/alignment of a Physical Layer Protocol Data Unit (PPDU);
after a Short Inter-Frame Space (SIFS) following the transmission of the sync frame, performing a first simultaneous reception according to the NSTR capability, wherein the first simultaneous reception comprises: receiving, via the first link, a first data frame sent from the AP, and receiving, via the second link, a second data frame sent from the STA;
performing a second simultaneous transmission according to the NSTR capability, wherein the second simultaneous transmission comprises: sending, via the first link, a first acknowledgement frame to the AP to acknowledge receipt of the first data frame, and sending, via the second link, a second acknowledgement frame to the STA to acknowledge receipt of the second data frame; and
performing a third simultaneous transmission according to the NSTR capability, wherein the third simultaneous transmission comprises: forwarding, via the first link, the second data frame sent from the STA to the AP, and forwarding, via the second link, the first data frame sent from the AP to the STA.

In an eighth aspect, the present disclosure provides a relay communication method performed at a station acting as a relay station in a wireless local area network, wherein the multi-link capable relay station performs a multi-link relay station/forwarding operation, wherein a first link of the multi-link is used for receiving a frame from an access point (AP) or transmitting a frame to the AP, and a second link of the multi-link is used for receiving a frame from a station (STA) or transmitting a frame to the STA, wherein the relay station is a multi-link device (MLD) having a non-simultaneous transmit and receive (NSTR) capability, the method comprising:
performing downlink forwarding or uplink forwarding;
wherein the downlink forwarding comprises:
   receiving a first data frame from the AP via the first link, and after a first time interval, transmitting a first acknowledgement frame to the AP via the first link to acknowledge receipt of the first data frame by the relay station;
   after a second time interval, forwarding the first data frame to the STA via the second link, and after a third time interval, receiving a second acknowledgement frame from the STA via the second link to acknowledge receipt of the first data frame by the STA; and
   after a fourth time interval, forwarding the second acknowledgement frame to the AP via the first link;
   wherein the uplink forwarding comprises:
      receiving a second data frame from the STA via the second link, and after a fifth time interval, transmitting a third acknowledgement frame to the STA via the second link to acknowledge receipt of the second data frame by the relay station;
      after a sixth time interval, forwarding the second data frame to the AP via the first link, and after a seventh time interval, receiving a fourth acknowledgement frame from the AP via the first link to acknowledge receipt of the second data frame by the AP; and
      after an eighth time interval, forwarding the fourth acknowledgement frame to the STA via the second link.

In a ninth aspect, the present disclosure provides a relay communication method performed at a station acting as a relay station in a wireless local area network, wherein the multi-link capable relay station performs a multi-link relay station/forwarding operation, wherein a first link of the multi-link is used for receiving a frame from an access point (AP) or transmitting a frame to the AP, and a second link of the multi-link is used for receiving a frame from a station (STA) or transmitting a frame to the STA, wherein the relay station is a multi-link device (MLD) having a non-simultaneous transmit and receive (NSTR) capability, the method comprising:
performing downlink forwarding or uplink forwarding;
wherein the downlink forwarding comprises:
   receiving a first data frame from the AP via the first link, and after a first time interval, transmitting a first acknowledgement frame to the AP via the first link to acknowledge receipt of the first data frame by the relay station;
   after a second time interval, forwarding the first data frame to the STA via the second link, and after a third time interval, receiving a second acknowledgement frame from the STA via the second link to acknowledge receipt of the first data frame by the STA; and
   after a fourth time interval, forwarding the second acknowledgement frame to the AP via the first link;
      wherein the uplink forwarding comprises:
      receiving a second data frame from the STA via the second link, and after a fifth time interval, transmitting a third acknowledgement frame to the STA via the second link to acknowledge receipt of the second data frame by the relay station;
      after a sixth time interval, forwarding the second data frame to the AP via the first link, and after a seventh time interval, receiving a fourth acknowledgement frame from the AP via the first link to acknowledge receipt of the second data frame by the AP; and
      after an eighth time interval, forwarding the fourth acknowledgement frame to the STA via the second link.

An embodiment of the present disclosure provides a network node, comprising a processor and a memory, wherein the processor is configured to retrieve and execute a computer program stored in the memory to cause a device in which the processor is installed to perform the disclosed method.

The disclosed method may be embodied as computer-executable instructions stored in a non-transitory computer-readable medium. The non-transitory computer-readable medium, when loaded into a computer, causes a processor of the computer to perform the disclosed method.

The non-transitory computer-readable medium may include at least one of the group consisting of: a hard disk, a CD-ROM, an optical storage device, a magnetic storage device, a Read-Only Memory (ROM), a Programmable Read-Only Memory (PROM), an Erasable Programmable Read-Only Memory (EPROM), an Electrically Erasable Programmable Read-Only Memory (EEPROM), and flash memory.

The disclosed method may be embodied as a computer program product that causes a computer to perform the disclosed method.

The disclosed method may be embodied as a computer program that causes a computer to perform the disclosed method.

Some embodiments of the present disclosure implement improvements to relay-related technologies for IEEE 802.11bn, including the following technical points:
1) Relay discovery method: including definition of relay capability information and a method for exchanging relay capability information.
2) Relay-related RSSI measurement and feedback method: including an AP-initiated RSSI measurement and feedback mechanism and a STA-initiated RSSI measurement and feedback mechanism.
3) Method for selecting a suitable relay station: including a method for an AP to select an optimal relay station and a method for a STA to select an optimal relay station.
4) Relay channel sounding and feedback method.
5) Relay BSR design and feedback method: including frame format design for a relay carrying a BSR and a BSR transmission method for a relay.
6) Relay transmission and scheduling method: including AP-initiated relay transmission scheduling and STA-initiated relay transmission scheduling.
7) Multi-link capable relay transmission method: including simultaneous transmit and receive (STR) relay forwarding operation and non-simultaneous transmit and receive (NSTR) relay forwarding operation.

The present disclosure is intended to design various schemes applicable to future Wi-Fi 8 and its subsequent standards to implement functions necessary for relay operations. Although some schemes may have been disclosed or adopted in the prior art, the present disclosure can achieve relay operations with lower latency and thus still contains technical innovations. These innovations are highly likely to be adopted in the 802.11bn standard.

### BRIEF DESCRIPTION OF THE DRAWINGS

One or more embodiments are illustrated by way of example in the figures of the accompanying drawings. These examples are not intended to be limiting of the embodiments. In the drawings, like reference numerals designate similar elements. Unless otherwise stated, the figures in the drawings are not necessarily drawn to scale. The division of the following embodiments is for convenience of description and should not constitute any limitation on the specific implementations of the present disclosure. The various embodiments can be combined and cross-referenced with each other, provided that they are not mutually exclusive.
FIG. 1 is a schematic diagram illustrating a method for discovering a relay station according to an embodiment of the present disclosure.
FIG. 2 is a schematic diagram illustrating the format of an Extended Capabilities element.
FIG. 3 is a schematic diagram illustrating the format of an Ultra High Reliability (UHR) Relay Capabilities element.
FIG. 4 is a schematic diagram illustrating the interaction of relay capability information.
FIG. 5 is a schematic diagram illustrating the format of a relay station information element.
FIG. 6 is a diagram illustrating a method for relay station-related Received Signal Strength Indicator (RSSI) measurement and feedback according to an embodiment of the present disclosure.
FIG. 7 is a schematic diagram illustrating parallel measurement of RSSI, where an Access Point (AP) directly requests a Station (STA) to report an RSSI Report.
FIG. 8 is a schematic diagram illustrating two methods for parallel measurement of RSSI, where an AP instructs a relay to forward an RSSI Report.
FIG. 9 is a schematic diagram illustrating serial measurement of RSSI, where an AP directly requests a STA to report an RSSI Report.
FIG. 10 is a schematic diagram illustrating serial measurement of RSSI, where an AP instructs a relay to forward an RSSI Report.
FIG. 11 is a schematic diagram illustrating a Trigger frame and the format of its Common Info field.
FIG. 12 is a schematic diagram illustrating the format of the User Info field of a Trigger frame.
FIG. 13 is a schematic diagram illustrating the format of an RSSI Report Request frame.
FIG. 14 is a schematic diagram illustrating the format of an RSSI report frame.
FIG. 15 is a schematic diagram illustrating a scenario where a STA sends a Null Data Packet Announcement (NDPA) frame and a Null Data Packet (NDP) frame, a relay station performs parallel RSSI measurement, and the STA selects the relay station.
FIG. 16 is a schematic diagram illustrating a scenario where a STA sends an NDPA frame and an NDP frame, a relay station performs serial RSSI measurement, and the STA selects the relay station.
FIG. 17 is a schematic diagram illustrating a scenario where a STA sends an NDPA frame and an NDP frame, the STA or an AP performs parallel RSSI measurement, and the STA selects the relay station.
FIG. 18 is a schematic diagram illustrating a scenario where a STA sends an NDPA frame and an NDP frame, the STA or an AP performs serial RSSI measurement, and the STA selects the relay station.
FIG. 19 is a schematic diagram illustrating a scenario where a STA sends an NDPA frame and an NDP frame, the STA or an AP performs parallel RSSI measurement, and the result is reported to the AP for the AP to select the relay station.
FIG. 20 is a schematic diagram illustrating a scenario where a STA sends an NDPA frame and an NDP frame, the STA or an AP performs serial RSSI measurement, and the result is reported to the AP for the AP to select the relay station.
FIG. 21 is a schematic diagram illustrating a scenario where a STA sends a Trigger frame, a relay station sends a Trigger-Based Physical Layer Protocol Data Unit (TB PPDU) within a Short Inter-Frame Space (SIFS) after receiving the Trigger frame, the STA or an AP performs parallel RSSI measurement, and a relay station is then selected.
FIG. 22 is a schematic diagram illustrating a scenario where a STA sends a Trigger frame, a relay station sends a TB PPDU within a SIFS after receiving the Trigger frame, the STA or an AP performs serial RSSI measurement, and a relay station is then selected.
FIG. 23 is a schematic diagram illustrating a scenario where a STA sends a Trigger frame, a relay station sends a TB PPDU within a SIFS after receiving the Trigger frame, the STA or an AP performs parallel RSSI measurement, and the result is reported to the AP for the AP to select the relay station.
FIG. 24 is a schematic diagram illustrating a scenario where a STA sends a Trigger frame, a relay station sends a TB PPDU within a SIFS after receiving the Trigger frame, the STA or an AP performs serial RSSI measurement, and the result is reported to the AP for the AP to select the relay station.
FIG. 25 is a schematic diagram illustrating the format of a Null Data Packet Announcement (NDPA) frame.
FIG. 26 is a schematic diagram illustrating the format of the STA Info field of an Extremely High Throughput (EHT) NDPA frame.
FIG. 27 is a diagram illustrating a method for selecting a relay station according to an embodiment of the present disclosure.
FIG. 28 is a schematic diagram illustrating an AP initiating a relay station selection.
FIG. 29 is a schematic diagram illustrating a STA initiating a relay station selection.
FIG. 30 is a schematic diagram illustrating the format of a Data frame.
FIG. 31 is a schematic diagram illustrating the format of a Relay Selection frame that indicates a single relay station.
FIG. 32 is a schematic diagram illustrating a Relay Selection frame that indicates one or more relay stations.
FIG. 33 is a schematic diagram illustrating a Medium Access Control (MAC) frame format.
FIG. 34 is a schematic diagram illustrating a relay communication method according to an embodiment of the present disclosure.
FIG. 35 is a schematic diagram illustrating a signaling flow for a STA to report a Buffer Status Report (BSR) to an AP.
FIG. 36 is a schematic diagram illustrating a signaling flow for passively reporting a BSR.
FIG. 37 is a schematic diagram illustrating a process where transmission from an AP to a relay station and then to a STA is completed by sharing the same Transmission Opportunity (TXOP) obtained by the AP.
FIG. 38 is a schematic diagram illustrating a process where transmission among a STA, a relay station, and an AP is completed by sharing the same TXOP obtained by the AP.
FIG. 39 is a schematic diagram illustrating a process where transmission from an AP to a relay station and then to a STA is completed by sharing different TXOPs obtained by the AP.
FIG. 40 is a schematic diagram illustrating a process where transmission from an AP to a relay station and then to a STA is completed using different TXOPs obtained by the AP and the relay station.
FIG. 41 is a schematic diagram illustrating a process where transmission from a STA to a relay station and then to an AP is completed by sharing the TXOP obtained by the STA.
FIG. 42 is a schematic diagram illustrating a process where transmission from a STA to a relay station and then to an AP is completed by sharing a TXOP obtained by the STA and using a TXOP obtained by the AP.
FIG. 43 is a schematic diagram illustrating a scenario where a STA and a relay station each obtain a TXOP to complete transmission between the STA and the relay station and transmission between the relay station and the AP.
FIG. 44 is a schematic diagram illustrating the format of a Multi-User Request-to-Send Transmission Opportunity Sharing (MU-RTS TXS) trigger frame.
FIG. 45 is a schematic diagram illustrating a TXOP Sharing frame.
FIG. 46 is a schematic diagram illustrating a Simultaneous Transmit and Receive (STR) relay forwarding operation.
FIG. 47 is a schematic diagram illustrating a Non-Simultaneous Transmit and Receive (NSTR) relay forwarding operation.
FIG. 48 is a schematic diagram illustrating the format of a Relay Request frame.
FIG. 49 is a schematic diagram illustrating a process of uplink and downlink transmission using multi-link time division.
FIG. 50 is a schematic diagram illustrating a STA and an AP that execute the method disclosed in the embodiments of the present disclosure.
FIG. 51 is a schematic diagram of a chip according to the present disclosure.

### DETAILED DESCRIPTION

To make the objectives, technical solutions, and advantages of the present application clearer, some embodiments of the present application are described in further detail below with reference to the accompanying drawings and embodiments. It should be understood that the specific embodiments described herein are merely for explaining the present application and are not intended to limit the present application.

The technical term abbreviations used in the description of the present application are shown in the table below:

**Table 1**

| **Technical Term Abbreviation** | **Full Technical Term** |
|---|---|
| A-MSDU | Aggregate MAC Service Data Unit |
| AID | Association Identifier |
| AP | Access Point |
| BSR | Buffer Status Report |
| BSRP | Buffer Status Report Poll |
| BSS | Basic Service Set |
| CTS | Clear to Send |
| DMG relay | Directional Multi-Gigabit relay |
| EHT | Extremely High Throughput |
| HT | High Throughput |
| MLD | Multi-Link Device |
| MSDU | MAC Service Data Unit |
| MU-RTS | Multi-User Request-to-Send |
| NDP | Null Data Packet |
| NDPA | NDP Announcement |
| NFRP | NDP Feedback Report Poll |
| NSTR | Non-simultaneous Transmit and Receive |
| PCF | Point Coordination Function |
| PHY | Physical Layer |
| PIFS | Priority Interframe Space |
| PPDU | Physical Layer Protocol Data Unit |
| QoS | Quality of Service |
| RSSI | Received Signal Strength Indication |
| RU | Resource Unit (RU) |
| SIFS | Short Interframe Space |
| SINR | Signal-to-Interference-plus-Noise Ratio |
| SNR | Signal-to-Noise Ratio |
| STA | Station |
| STR | Simultaneous Transmit and Receive |
| TB PPDU | Trigger-based Physical Layer Protocol Data Unit |
| TXOP | Transmission Opportunity |
| TXS | Transmission Opportunity sharing |
| UHR | Ultra High Reliability |

Embodiments of the present application relate to the technical field of relay stations (Relay) in the Institute of Electrical and Electronics Engineers (IEEE) 802.11bn (also known as Wi-Fi 8 Ultra High Reliability (UHR)) and subsequent standards. Through relay stations, the signal coverage/transmission distance of Wi-Fi can be extended, the rate for cell-edge users can be improved, latency can be reduced, and the user experience can be enhanced.

### A.1 Method for Discovering Relay Stations

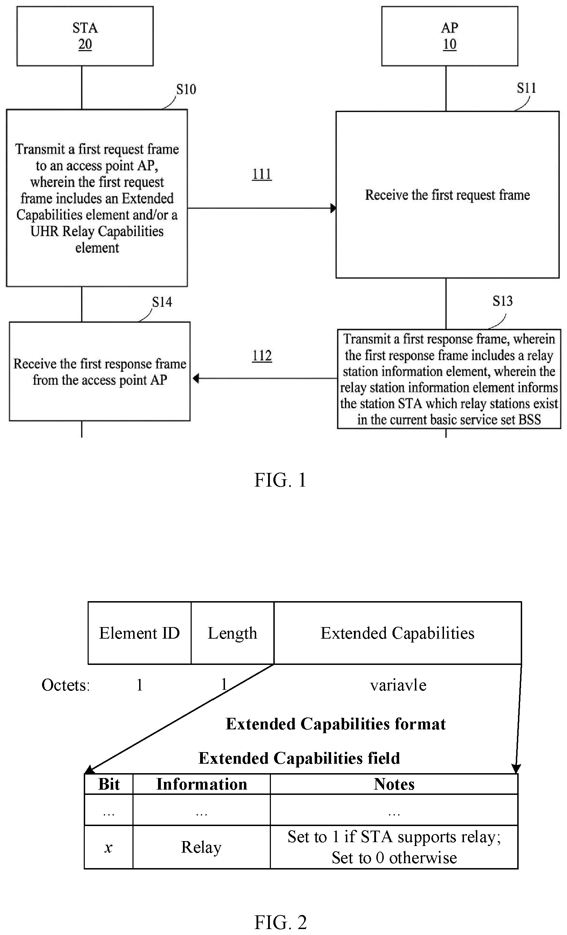

Referring to FIG. 1, a station (STA) 20 of a wireless local area network transmits a first request frame 111 to an access point (AP) 10 (S10), where the first request frame 111 comprises an Extended Capabilities element and/or a UHR Relay Capabilities element, the Extended Capabilities element comprises a relay station subfield for indicating whether relay forwarding is supported, and the UHR Relay Capabilities element comprises a UHR relay capability information field. In some embodiments of the present disclosure, the first request frame 111 is an Association Request frame or a Probe Request frame.

The access point (AP) 10 receives the first request frame 111 (S11) and transmits a first response frame 112 (S13), where the first response frame 112 comprises a relay station information element, and the relay station information element indicates the relay stations contained in a current basic service set (BSS). In some embodiments of the present disclosure, the first response frame 112 is an Association Request frame, a Probe Response frame, or a Beacon frame. In one example, the first request frame 111 is an Association Request frame, and the first response frame 112 is an Association Request frame. In another example, the first request frame 111 is a Probe Request frame, and the first response frame 112 is a Probe Request frame.

The station (STA) 20 receives the first response frame 112 from the access point (AP) (S14).

In some embodiments of the present disclosure, the relay station information element comprises one or more relay station information fields, and each of the one or more relay station information fields corresponds to UHR relay capability information of a relay station. The UHR relay capability information comprises one or more of the following:
an identifier of the relay station: for indicating an identifier of the relay station associated with the UHR relay capability information field;
a Relay Buffer Size subfield of the relay station: for indicating a buffer space size supported by the STA when the STA acts as a relay station;
a Multi-hop Support subfield: for indicating whether the STA supports a multi-hop relay operation when the STA acts as a relay station; and
a Relay Specific Channel/Band subfield: for indicating a channel/band dedicated to a relay operation when the STA acts as a relay station.

### A.1.1 Indication of Relay Capability Information

There are several methods for indicating relay capability information: 1) using the existing Extended Capabilities element to indicate simple relay capability information (e.g., whether relay is supported); 2) extending/modifying the existing Relay Capabilities element in standards such as 802.11ad/802.11ay to indicate more relay capability information proposed in embodiments of the present disclosure; 3) defining a new UHR Relay Capabilities element to indicate the detailed relay capability information proposed in embodiments of the present disclosure.

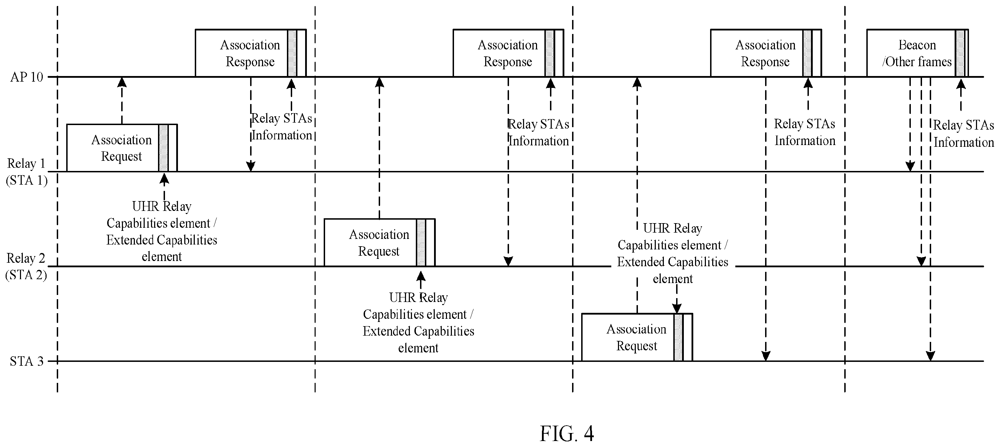

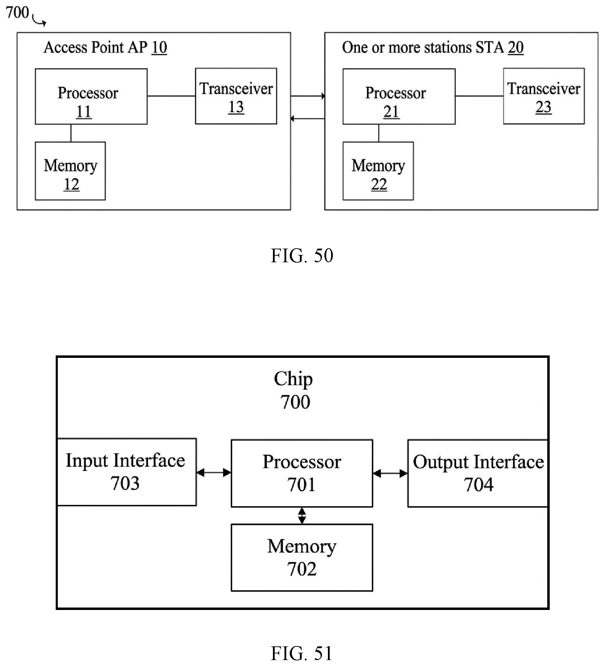

As shown in FIG. 2, Relay information is added to the existing Extended Capabilities element to indicate whether the current STA supports Relay. The current STA (e.g., STA 1, STA 2, or STA 3 in FIG. 4, or one of the STAs 20 in FIG. 50) may be a STA that sends an Association Request frame having the Extended Capabilities element. For example, in the Extended Capabilities field of the Extended Capabilities element, a Relay subfield value of 1 represents that the current STA supports Relay, and a Relay subfield value of 0 represents that the current STA does not support Relay.

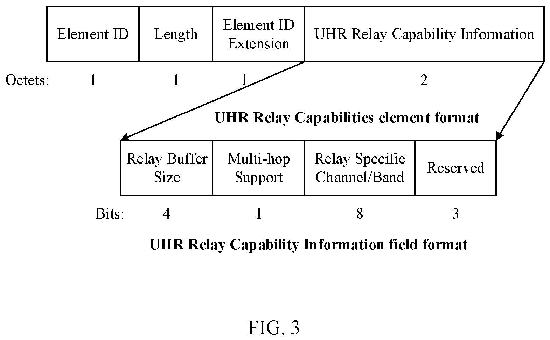

FIG. 3 shows a newly defined UHR Relay Capabilities element, which is used to indicate detailed information supported by a relay station. If a frame sent by a certain STA (which may be a STA or an AP) (e.g., the AP, STA 1, STA 2, or STA 3 in FIG. 4, or AP 10 or one of the STAs 20 in FIG. 50) carries the UHR Relay Capabilities element, this represents that the STA supports the relay capability.

The UHR Relay Capabilities element includes a UHR Relay Capability Information field, which specifically includes the following fields:
1. Identifier of the relay station: used to indicate an identifier of the relay station associated with the UHR Relay Capability Information field;
2. Relay Buffer Size subfield: used to indicate the buffer space size supported by the current STA when acting as a relay station.
3. Multi-hop Support subfield: used to indicate whether the current STA supports a multi-hop relay operation when acting as a relay station. For example, a Multi-hop Support subfield value of 0 represents that the current STA does not support a multi-hop relay operation when acting as a relay station, and a Multi-hop Support subfield value of 1 represents that the current STA supports a multi-hop relay operation when acting as a relay station.
4. Relay Specific Channel/Band subfield: used to indicate a channel/band dedicated to a relay operation when the current STA acts as a relay station. The Relay Specific Channel/Band subfield may be set to "reserved", which in this case represents that the channel/band on which the current STA operates when acting as a relay station is the same as its channel configuration when acting as a STA, i.e., there is no dedicated relay channel/band.

In some embodiments of the present disclosure, the Relay Buffer Size subfield represents the buffer size for all MSDUs and A-MSDUs buffered by the relay STA, expressed in units of 4096 octets and rounded to the nearest multiple of 4096 octets. A Relay Buffer Size subfield set to 15 indicates that the buffer size is greater than 57344 octets. A Relay Buffer Size subfield set to 0 is used only to indicate that there is no buffered traffic.

Embodiments of the present disclosure do not limit the length of the Relay Buffer Size subfield; the 4-bit length shown in FIG. 3 is only an example. In addition, the unit is not limited to 4096 octets, and other units may be used.

It should be noted that since the Relay Capabilities element format used for Directional Multi-Gigabit (DMG) relay forwarding operations has already been defined in 802.11ad/802.11ay, the Relay Capabilities element contains a series of DMG relay station-related capability information. In some embodiments of the present disclosure, the existing Relay Capabilities element can still be used as an indication of UHR Relay capability information (i.e., the UHR Relay Capabilities element can carry all the information of the Relay Capabilities element to indicate the corresponding UHR relay capability information). In addition, the relay capability information format designed in FIG. 2 and FIG. 3 in this section serves as a supplement to the Relay Capabilities element related to DMG relay forwarding operations.

### A.1.2 Relay Capability Information Interaction Method

FIG. 4 is a flowchart of a process in which STAs (e.g., STA1 and STA 2) send their UHR relay capability to an AP (e.g., AP 10 of FIG. 50) through an Association process. A STA that supports UHR Relay (e.g., STA1 and STA 2) can set the Relay subfield in the Extended Capabilities element carried in an Association Request frame sent to AP 10 to 1 to indicate that it supports Relay, or send its supported detailed relay capability information to AP 10 in the UHR Relay Capabilities element carried in the Association Request frame sent to AP 10. The horizontal axis of the flowchart can be used to represent a time axis.

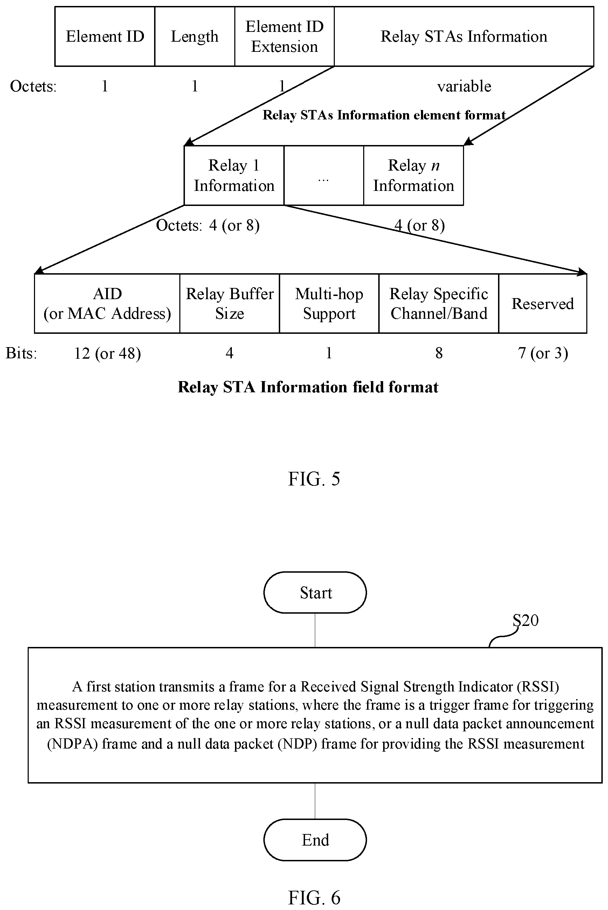

Furthermore, AP 10 can inform the STA of which relay stations exist in the current BSS (and the detailed capability information of each relay station) via a Relay STAs Information element in a Beacon frame or in an Association Response frame sent in response to an Association Request frame from the STA. The format of the Relay STAs Information element is as shown in FIG. 5:

The Relay STAs Information element includes one or more Relay STA Information fields, with each Relay STA Information field corresponding to the UHR relay capability information of one relay station. A MAC Address field therein is used to indicate the Association Identifier (AID) or MAC address of a STA that supports UHR Relay. For example, if the information for relay station 1 indicates the UHR relay capability information of STA1, then the AID field in the information for relay station 1 indicates the AID assigned to STA1 by AP 10. For example, if the information for relay station 1 indicates the UHR relay capability information of STA1, then the MAC Address field in the information for relay station 1 indicates the MAC address of STA1. The definitions of the Relay Buffer Size subfield, the Multi-hop Support subfield, and the Relay Specific Channel/Band subfield that follow the AID (or MAC Address) field are consistent with those in FIG. 3 and are not further described herein.

It should be noted that in FIG. 4, in addition to exchanging relay capability information between the STA and AP 10 via an Association Request frame and/or an Association Response frame, the relay capability information can also be exchanged via a Probe Request frame and/or a Probe Response frame, which are not shown in the figure. The Probe Request frame and/or the Probe Response frame can carry the Extended Capabilities element and/or the UHR Relay Capabilities element described above, and the Probe Response frame can carry the Relay STAs Information element described above.

Through the design described above, each STA in the BSS (e.g., STA 1, STA 2, and STA 3) can know which relay STAs exist in the current BSS, which can then assist in subsequent operations such as link measurement of relay stations and selection of a suitable relay station.

### A.2. RSSI Measurement and Feedback Method Related to Relay Stations

The Received Signal Strength Indicator (RSSI) between the AP 10 and a relay station can be directly measured by the AP 10 after the relay station sends a measurement signal (actively sent or sent upon a request/trigger from the AP 10). However, the RSSI between the relay station and a STA requires an additional measurement mechanism. This is specifically divided into an AP 10-initiated RSSI measurement and feedback method and a STA-initiated RSSI measurement and feedback method, with the detailed design as follows.

Referring to FIG. 6, a first station transmits a frame for a Received Signal Strength Indicator (RSSI) measurement to one or more relay stations, where the frame is a trigger frame for triggering an RSSI measurement of the one or more relay stations, or a null data packet announcement (NDPA) frame and a null data packet (NDP) frame for providing the RSSI measurement (S20). In some embodiments of the present disclosure, the first station is an access point (AP), and the frame is the trigger frame, used for triggering the one or more relay stations to send a trigger-based physical layer protocol data unit (TB PPDU) according to a resource indication in the trigger frame;
the AP measures an RSSI of the TB PPDU to obtain an RSSI between the AP and the relay station;
the AP sends an RSSI reporting request frame to request RSSI information from the RSSI measurement between the relay station and a STA.

In some embodiments of the present disclosure, the function of the trigger frame includes at least one of the following:
a first trigger frame is used for triggering a first relay station and a second relay station among the one or more relay stations to send the TB PPDU after a preset interval according to the resource indication of the trigger frame;
informing the STA to prepare to receive the TB PPDU and measure the RSSI;
the first trigger frame and a second trigger frame are sent serially to the first relay station and the second relay station.

In some embodiments of the present disclosure, the AP requests the STA to directly report the RSSI information measured between the one or more relay stations and the STA to the AP; or
the AP requests the one or more relay stations to forward the RSSI information measured between the one or more relay stations and the STA to the AP.

### A.2.1. AP-Initiated RSSI Measurement and Feedback Mechanism

The steps of the AP 10-initiated RSSI measurement mechanism are as follows:
Step 1: The AP 10 sends a trigger frame to one or more relay stations. The relay stations, according to an indication of corresponding resources (e.g., Resource Unit, time) in the trigger frame, send a Trigger-based Physical Layer Protocol Data Unit (TB PPDU). The TB PPDU can carry a data frame or can be a null frame.
Step 2: The AP 10 directly measures the RSSI of the TB PPDU to obtain the RSSI between the AP 10 and the relay stations.
Step 3: The STA 3 also measures the TB PPDU sent by the relay stations to obtain RSSI information between the relay stations and the STA 3.
Step 4: The AP 10 sends a request frame (RSSI reporting request frame) to request the RSSI information between the relay stations and the STA 3.

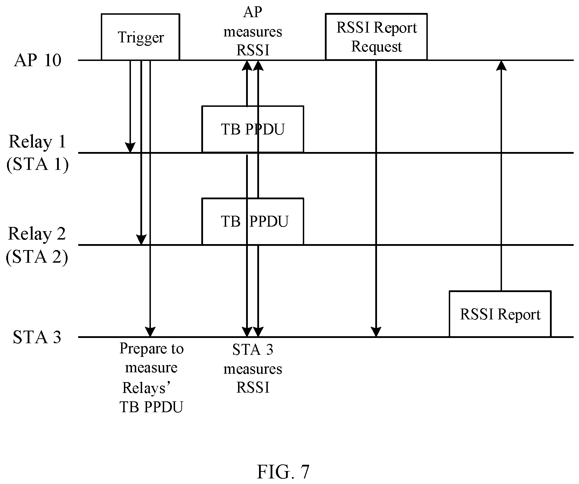

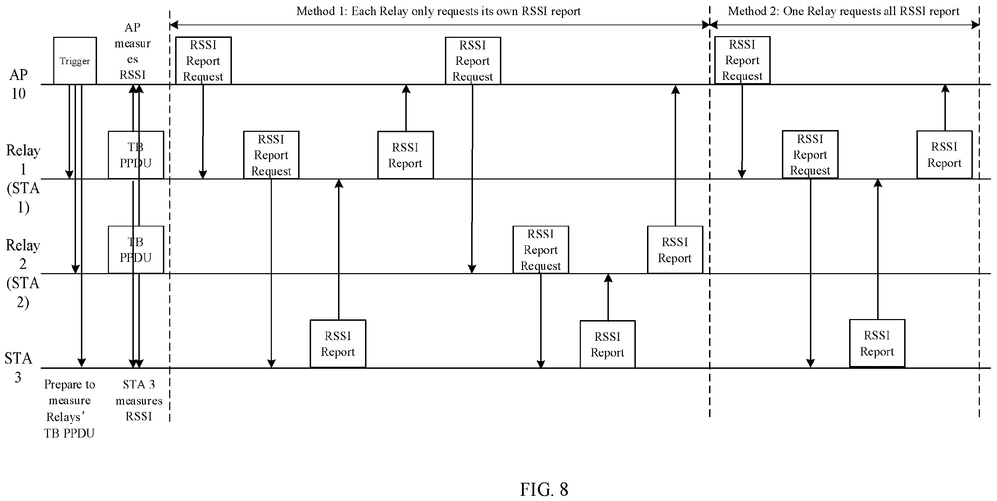

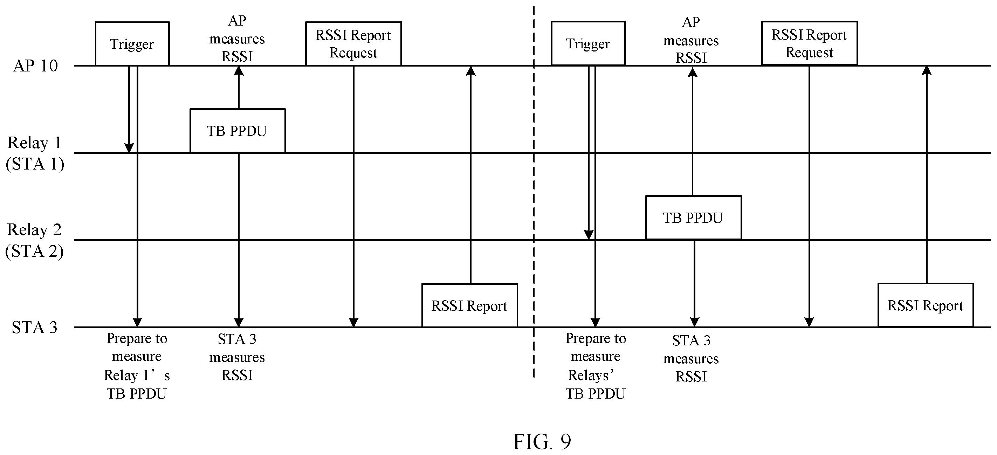

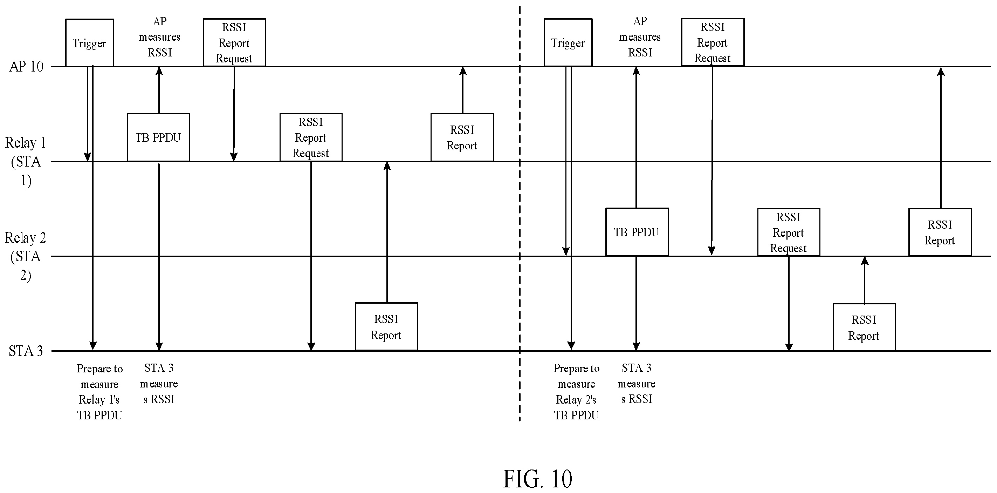

It should be noted that in steps 1 to 3, the AP 10 can trigger multiple relay stations to simultaneously send TB PPDUs for RSSI measurement (parallel measurement as shown in FIG. 7 and FIG. 8) and then report an RSSI report. Alternatively, the AP 10 can trigger only one relay station at a time to send a TB PPDU for RSSI measurement and reporting of an RSSI report, and then trigger another relay station to send a TB PPDU for RSSI measurement and reporting of an RSSI report (serial measurement as shown in FIG. 9 and FIG. 10).

### A.2.1.1 Parallel Measurement

As shown in FIG. 7 and FIG. 8, the AP 10 sends a Trigger frame to relay station 1, relay station 2, and STA 3. The function of the trigger frame includes:
1. Triggering relay station 1 and relay station 2 to simultaneously send a TB PPDU after a Short Interframe Space (SIFS) according to the resources (e.g., Resource Unit) indicated in the Trigger frame;
2. Informing the STA 3 to prepare to receive the TB PPDU and measure the RSSI.

In the parallel measurement mode, the aforementioned step 4 may also be implemented using the following two options for the AP 10 to obtain the RSSI between the relay stations and the STA 3:

### Option 1: The AP 10 directly requests the STA to report an RSSI report, as shown in FIG. 7

For example, this is applicable to a scenario where the STA 3 is within the coverage area of the AP 10. The AP 10 directly sends a request frame (RSSI report request frame) to the STA 3, and the STA 3 replies with an RSSI report frame (used to carry the RSSI results between the STA 3 and relay station 1 and between the STA 3 and relay station 2) to the AP 10.

### Option 2: The AP 10 requests the relay to forward the RSSI report, as shown in FIG. 8

For example, Option 2 can be applicable to a scenario where the STA 3 is not within the coverage area of the AP 10. The AP 10 sends a request frame (RSSI report request frame) to a relay station. The relay station then requests the STA 3 to send an RSSI report, and the relay station then reports the RSSI report to the AP 10. This operation can also be divided into the following two methods:
Method 1: Each relay station requests from the STA only the RSSI Report between that relay station and the STA.

In some embodiments of the present disclosure, the AP requests the first relay station to forward the RSSI information measured between the first relay station and the STA to the AP; and
the AP requests the second relay station to forward the RSSI information measured between the second relay station and the STA to the AP. In an example, the steps of Method 1 are as follows:
1) AP 10 first sends an RSSI Report Request frame to relay station 1, requesting only the RSSI Report between relay station 1 and STA 3;
2) Relay station 1 forwards the RSSI Report Request from AP 10 to STA 3;
3) STA 3 reports only the measured RSSI Report of relay station 1 to relay station 1;
4) Relay station 1 forwards the RSSI Report from STA 3 to AP 10;
5) Then, AP 10 sends an RSSI Report Request frame to relay station 2, requesting only the RSSI Report between relay station 2 and STA 3;
6) Relay station 2 forwards the RSSI Report Request from AP 10 to STA 3;
7) STA 3 reports only the measured RSSI Report of relay station 2 to relay station 2;
8) Relay station 2 forwards the RSSI Report from STA 3 to AP 10.

Through the above 8 steps of Method 1, AP 10 obtains the RSSI between relay station 1 and STA 3 and the RSSI between relay station 2 and STA 3.

Method 2: One relay station requests from the STA the RSSI Reports between all relay stations and the STA.

In some embodiments of the present disclosure, the AP requests one of the first relay station or the second relay station to forward the RSSI information measured between the first relay station and the STA and the RSSI information measured between the second relay station and the STA to the AP. In an example, the steps of Method 2 are as follows:
1) AP 10 sends an RSSI Report Request frame to relay station 1 (it may also be relay station 2; relay station 1 is used as an example for illustration here), requesting the RSSI Report between relay station 1 and STA 3 and the RSSI Reports between other relay stations (e.g., relay station 2) and STA 3.
2) Relay station 1 forwards the RSSI Report Request from AP 10 to STA 3.
3) STA 3 reports the measured RSSI Report of relay station 1 and the RSSI Report of relay station 2 to relay station 1.
4) Relay station 1 forwards the RSSI Report from STA 3 to AP 10.

Through the above 4 steps of Method 2, AP 10 obtains the RSSI between relay station 1 and STA 3 and the RSSI between relay station 2 and STA 3.

### A.2.1.2 Serial Measurement

As shown in FIG. 9 and FIG. 10, AP 10 first sends a Trigger frame to relay station 1 and STA 3. The functions of the Trigger frame include:
1. Triggering relay station 1 to send a trigger-based physical layer protocol data unit (TB PPDU) after a short inter-frame space (SIFS) time according to the resources (e.g., Resource Unit) indicated in the Trigger frame.
2. Informing STA 3 to prepare to receive the TB PPDU and measure the RSSI.

Then, AP 10 sends another Trigger frame to relay station 2 and STA 3. The functions of the Trigger frame include:
1. Triggering relay station 2 to send a TB PPDU after a SIFS time according to the resources (e.g., Resource Unit) indicated in the Trigger frame.
2. Informing STA 3 to prepare to receive the TB PPDU and measure the RSSI.

In this serial measurement mode, the aforementioned step 4 can also be divided into the following two options for AP 10 to obtain the RSSI between the relay stations and STA 3:

Option 1: The AP directly requests the STA to report the RSSI Report, as shown in FIG. 9.

For example, Option 1 is applicable to a scenario where STA 3 is within the coverage area of AP 10. AP 10 directly sends a request frame (RSSI Report Request frame) to STA 3, and STA 3 replies with an RSSI Report frame (used for carrying the RSSI results between STA 3 and relay station 1 and between STA 3 and relay station 2) to AP 10.

Option 2: The AP has a relay station forward the RSSI Report, as shown in FIG. 10.

For example, Option 2 is applicable to a scenario where STA 3 is not within the coverage area of AP 10. AP 10 sends a request frame (RSSI Report Request frame) to a relay station, the relay station then requests STA 3 to send the RSSI Report, and the relay station then reports the RSSI Report to AP 10.

### A.2.1.3 Related Frame Format Design

### a) Trigger Frame Format

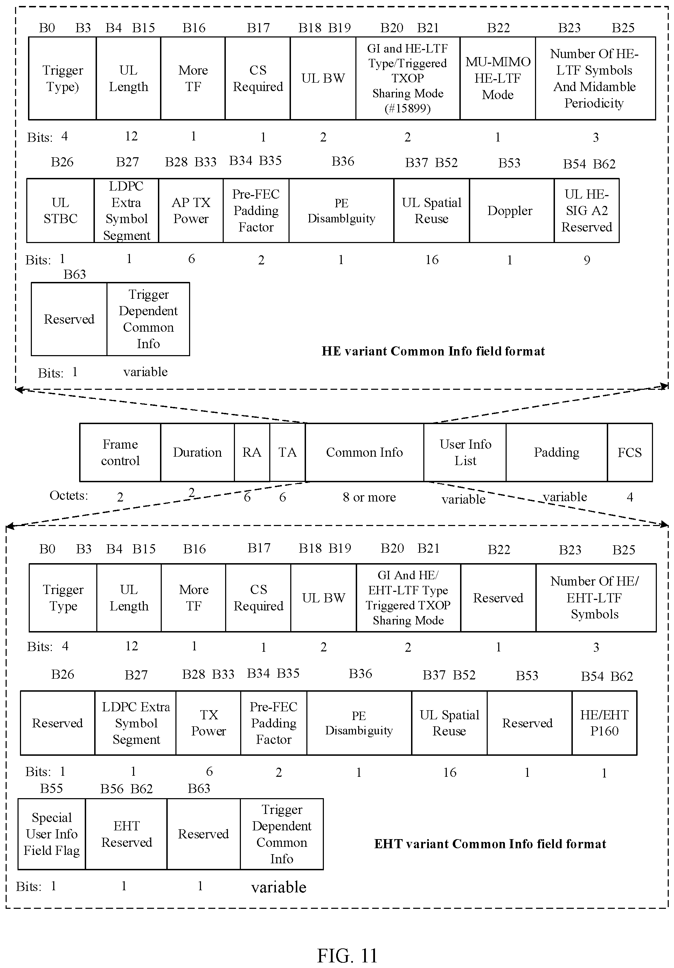

As shown in FIG. 11, a frame format of a Trigger frame is illustrated. In the frame format, a Trigger Type subfield of a Common Info field indicates whether the trigger frame is a RSSI trigger frame. The Common Info field can be a High Efficiency (HE) variant Common Info field (on the left) or an Extremely High Throughput (EHT) variant Common Info field (on the right). When the Trigger Type subfield is set to a preset first value, it indicates that the trigger frame is a basic trigger frame; when the Trigger Type subfield is set to a preset second value, it indicates that the trigger frame is the RSSI trigger frame.

The Trigger Type subfield indicates the type of the Trigger frame. In some embodiments, a Trigger Type subfield is set to 0, which indicates that this is a basic Trigger frame. However, the present disclosure is not limited thereto. For example, the Trigger Type subfield can also be set to any value from 9 to 15 to represent an RSSI Trigger frame.

When a Basic Trigger frame with a Trigger Type subfield set to0 is used, some embodiments of the present disclosure define any one bit from B63 of the HE variant Common Info field and B22/B26/B53/B56 to B63 of the EHT variant Common Info field as an RSSI Measurement subfield. When the RSSI Measurement subfield is set to 1, it indicates that the Trigger frame is used to trigger a STA/Relay to send a frame (i.e., a TB PPDU) for RSSI measurement; when the RSSI Measurement subfield is set to 0, it indicates reserved.

When an RSSI Trigger frame with the Trigger Type subfield set to any value from 9 to 15 is used, it indicates that the RSSI Trigger frame is used to trigger a STA/Relay to send a frame (i.e., a TB PPDU) for RSSI measurement.

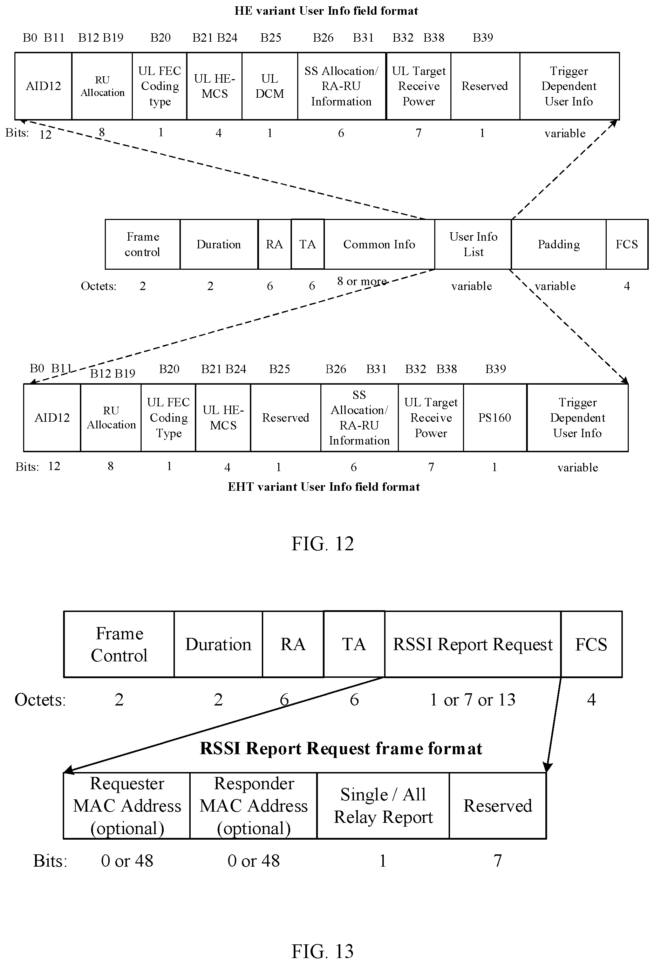

As shown in FIG. 12, a format of a User Info field of a Trigger frame is illustrated (which can be the HE variant User Info field on the left or the EHT variant User Info field on the right), where an AID12 subfield is used to indicate an Association Identifier (AID) of a specific STA. In addition, some embodiments of the present disclosure define B39 of the HE variant User Info field and B25 of the EHT variant User Info field as a transmit/receive (TX/RX) subfield, which is used to indicate whether the STA corresponding to the HE variant User Info field or the EHT variant User Info field is a transmitting end that sends a frame (TB PPDU) or a receiving end that receives a frame (TB PPDU) to perform an RSSI measurement, for example:
1. When the TX/RX subfield is set to 1, it indicates that the STA sends the frame (TB PPDU) for RSSI measurement;
2. When the TX/RX subfield is set to 0, it indicates that the STA receives the frame (TB PPDU) to perform an RSSI measurement.

### b) RSSI Report Request frame format

FIG. 13 illustrates a format of a Received Signal Strength Indicator (RSSI) Report Request frame according to some embodiments of the present disclosure. A Requester MAC Address field indicates the MAC address of a device that initiates an RSSI Report request (for example, AP 10 in section A.2.1), and a Responder MAC Address field indicates the MAC address of a device that is requested to send an RSSI Report (for example, the STA in section A.2.1). The Requester MAC Address field indicates the MAC address of the Requester of an RSSI Report. The Responder MAC Address field indicates the MAC address of the Responder of the RSSI Report.
1. When the Requester MAC Address field is absent, it means that the device sending the RSSI Report Request frame is the Requester of the RSSI Report.
2. When the Responder MAC Address field is absent, it means that the device receiving the RSSI Report Request frame is the Responder of the RSSI Report.
3. When both the Requester MAC Address field and the Responder MAC Address field are absent, it means that the device sending the RSSI Report Request frame is the Requester of the RSSI Report, and the device receiving the RSSI Report Request frame is the Responder of the RSSI Report. This corresponds to the scenarios in FIG. 7 and FIG. 9, where the AP 10 directly requests the STA to send an RSSI Report, and the RSSI Report Request frame does not need to indicate the Requester MAC Address and the Responder MAC Address.

The Single/All Relay Report field in the RSSI Report Request frame is used to indicate that the Requester of an RSSI Report requests an RSSI Report between one relay station and the STA or RSSI Reports between all relay stations and the STA:
1. Single/All Relay Report field = 1: Indicates that the Requester of the RSSI Report requests an RSSI Report between one relay station and the STA, for example, corresponding to Method 1 of Option 2 (i.e., FIG. 8) for parallel measurement in section A.2.1.1.
2. Single/All Relay Report field = 0: Indicates that the Requester of the RSSI Report requests RSSI Reports between all relay stations and the STA, for example, corresponding to Method 2 of Option 2 (i.e., FIG. 8) for parallel measurement in section A.2.1.1.

It should be noted that when a relay station uses a Null Data Packet (NDP) frame as a Trigger-based Physical Layer Protocol Data Unit (TB PPDU) to respond to a Trigger frame sent by the AP 10, the AP 10 can use a Null Data Packet Feedback Report Poll (NFRP) Trigger frame instead of an RSSI Report Request frame to request an RSSI Report.

### c) RSSI Report frame format

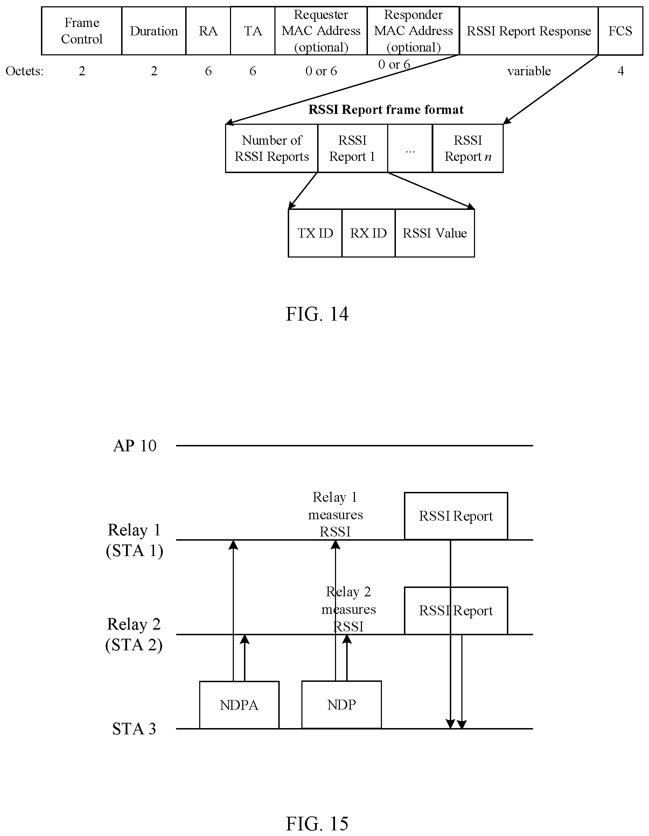

FIG. 14 illustrates a format of an RSSI Report frame according to some embodiments of the present disclosure. The frame can carry one or more RSSI Reports, the specific number of which is indicated by the Number of RSSI Reports field. Each RSSI Report (for example, RSSI Report 1 to RSSI Report N) corresponds to a transmitter identifier (TX ID) subfield, a receiver identifier (RX ID) subfield, and/or an RSSI Value subfield. The TX ID subfield indicates the MAC address or AID of the device that sends an RSSI measurement frame (TB PPDU). The RX ID subfield indicates the MAC address or AID of the device that receives the measurement frame (TB PPDU) and obtains the RSSI. The RSSI Value subfield carries the specific RSSI value.

In summary, in the RSSI measurement and feedback mechanism initiated by the AP 10 as described in section A.2.1, the relay station is selected by the AP 10. Since the RSSI information for the link between the AP 10 and the relay stations and the RSSI information for the link between the relay stations and STA 3 are both available to the AP 10, the AP 10 can select the optimal relay station to serve STA 3 based on this collective RSSI information. The specific method is described in section A.3.

### A.2.2 STA-initiated RSSI measurement and feedback mechanism

The STA-initiated RSSI measurement and feedback mechanism includes the following three methods, and each method may include multiple options.

In some embodiments of the present disclosure, Method 1 is used, where the first station is a non-AP STA, the frames are a Null Data Packet Announcement (NDPA) frame and a Null Data Packet (NDP) frame, and the STA receives an RSSI report obtained by the one or more relay stations from measuring the NDP frame; or

In some embodiments of the present disclosure, Method 2 is used, where the first station is a non-AP STA, the frames are a NDPA frame and a NDP frame, the one or more relay stations send an NDP frame after a Short Inter-frame Space (SIFS) upon receiving the NDPA frame, and the STA measures the NDP frame to obtain an RSSI report; or
In some embodiments of the present disclosure, Method 3 is used, where the first station is a non-AP STA, the frame is a trigger frame, the one or more relay stations send a Trigger-based Physical Layer Protocol Data Unit (TB PPDU) after a SIFS upon receiving the trigger frame, and the STA measures the TB PPDU to obtain an RSSI report.

Regarding RSSI reporting, in some embodiments of the present disclosure, the AP requests the STA to directly report the RSSI information of the measurement between the one or more relay stations and the STA to the AP; or
the AP requests the one or more relay stations to forward the RSSI information of the measurement between the one or more relay stations and the STA to the AP. The STA selects one of the one or more relay stations based on the RSSI report.

### A.2.2.1 Method 1

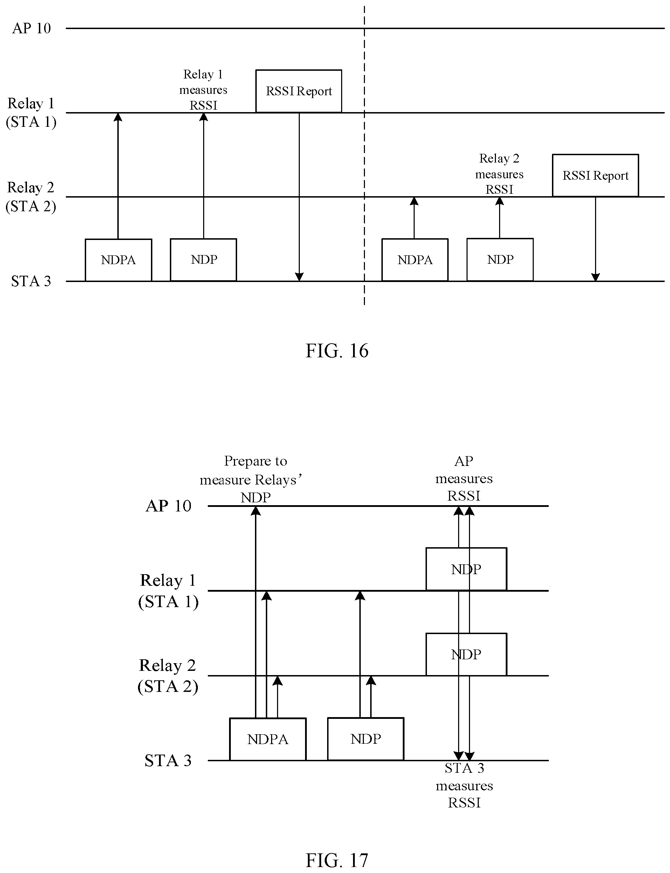

STA3 sends an NDPA frame and an NDP frame to one or more relay stations. The relay stations directly measure the NDP frame to obtain an RSSI Report, and then send the RSSI Report to STA3 in an RSSI Report frame. In this way, the STA can obtain the RSSI between the relay stations and the STA. The measurement of the RSSI between STA3 and multiple relay stations can also be performed in the following two ways: parallel measurement as shown in FIG. 15 and serial measurement as shown in FIG. 16.

Under Method 1, the relay station is selected by STA3: Since only STA3 knows the RSSI information between the relay stations and itself, STA3 selects the optimal relay station. For the specific method, refer to Section A.3.

### A.2.2.2 Method 2

STA3 sends an NDPA frame and an NDP frame to one or more relay stations. After receiving the NDPA frame, the relay stations send an NDP frame to STA3 after a SIFS. STA3 performs a measurement to obtain an RSSI Report. At this time, AP10 can also measure the NDP frame sent by the relay stations to obtain the RSSI between AP10 and the relay stations.

### Option 1: STA selects the optimal relay station based on the RSSI information between the relay stations and the STA

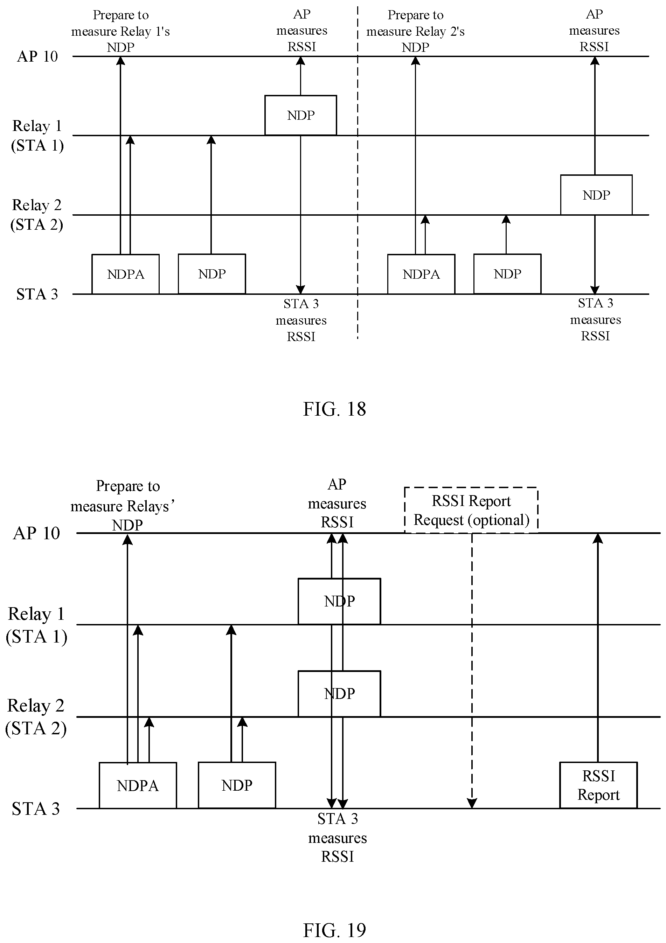

The measurement of the RSSI between STA3 and multiple relay stations can also be performed in the following two ways: parallel measurement as shown in FIG. 17 and serial measurement as shown in FIG. 18.

It should be noted that AP10 can obtain the RSSI between AP10 and the relay stations, and STA3 can obtain the RSSI between the relay stations and STA3.

Under Option 1 of Method 2, the relay station is selected by STA3: Since AP10 only obtains the RSSI between AP10 and the relay stations, and STA3 only obtains the RSSI between the relay stations and STA3, STA3 can select the optimal relay station based on the RSSI information between the relay stations and STA3, ignoring the impact of the RSSI between AP10 and the relay stations on the selection. For the detailed method, refer to Section A.3.

### Option 2: STA reports the RSSI information between the relay stations and itself to AP10, and AP10 selects the optimal relay station

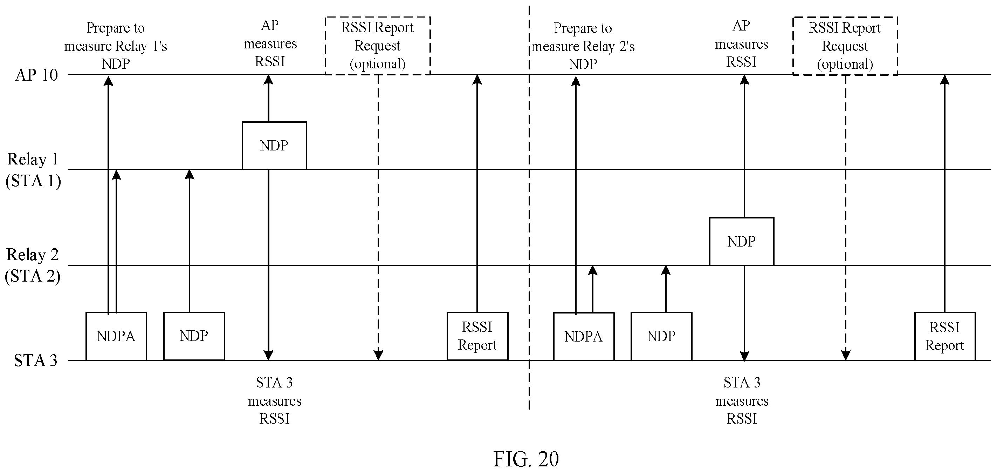

Based on Option 1, STA3 can also proactively report the RSSI Report between the relay stations and STA3 to AP10, or AP10 can request STA3 to report the RSSI Report between the relay stations and STA3 by sending an RSSI Report Request. This allows AP10 to obtain the RSSI between AP10 and the relay stations and the RSSI between the relay stations and STA3, and select the optimal relay station. The measurement and reporting by STA3 of the RSSI between itself and multiple relay stations can also be performed in the following two ways: parallel measurement as shown in FIG. 19 and serial measurement as shown in FIG. 20.

It should be noted that, in this option, as shown in FIG. 8 and FIG. 10, AP10 can also send an RSSI Report Request frame to a relay station (e.g., relay station 1 or relay station 2), and have the relay station forward it to STA3; STA3 then relays the RSSI Report to AP10 via the relay station.

Under Option 2 of Method 2, the relay station is selected by AP10: Since the RSSI information between AP10 and the relay stations and the RSSI information between the relay stations and STA3 are both available at AP10, AP10 can select the optimal relay station to serve STA3 based on a combination of the RSSI between AP10 and the relay stations and the RSSI between the relay stations and STA3. For the specific method, refer to Section A.3.

### A.2.2.3 Method 3

STA3 sends a Trigger frame to one or more relay stations. After receiving the Trigger frame, the relay stations send a TB PPDU to STA3 after a SIFS. STA3 measures the TB PPDU to obtain an RSSI Report. At this time, AP10 can also measure the TB PPDU sent by the relay stations to obtain the RSSI between AP10 and the relay stations.

### Option 1: The STA selects the optimal relay station based on RSSI information between the relay station and the STA

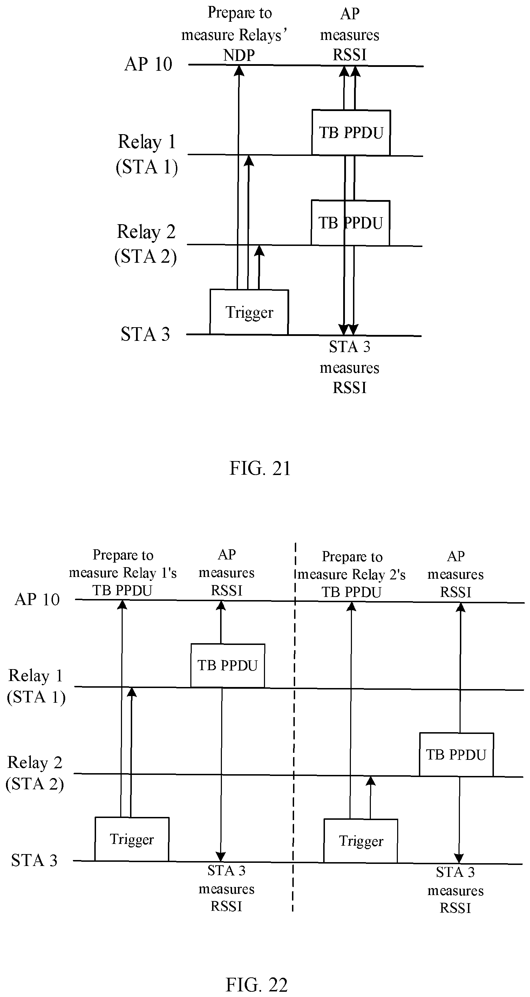

When the STA3 measures the RSSI between itself and multiple relay stations, the measurement can also be performed in the following two ways: parallel measurement as shown in FIG. 21 and serial measurement as shown in FIG. 22.

It should be noted that the AP10 can obtain the RSSI between the AP10 and the relay stations, and the STA3 can obtain the RSSI between the relay stations and the STA3.

Under Option 1 of Method 3, the relay station is selected by the STA3. Since the AP10 only obtains the RSSI between the AP10 and the relay stations, and the STA3 only obtains the RSSI between the relay stations and the STA3, the optimal relay station can be selected by the STA3 based on the RSSI information between the relay stations and the STA3, ignoring the impact of the RSSI between the AP10 and the relay stations on the relay operation.

### Option 2: The STA reports the RSSI information between the relay stations and itself to the AP10, and the AP10 selects the optimal relay station

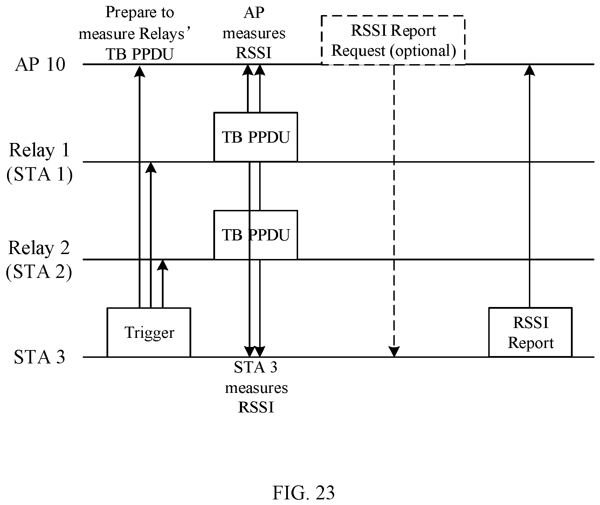

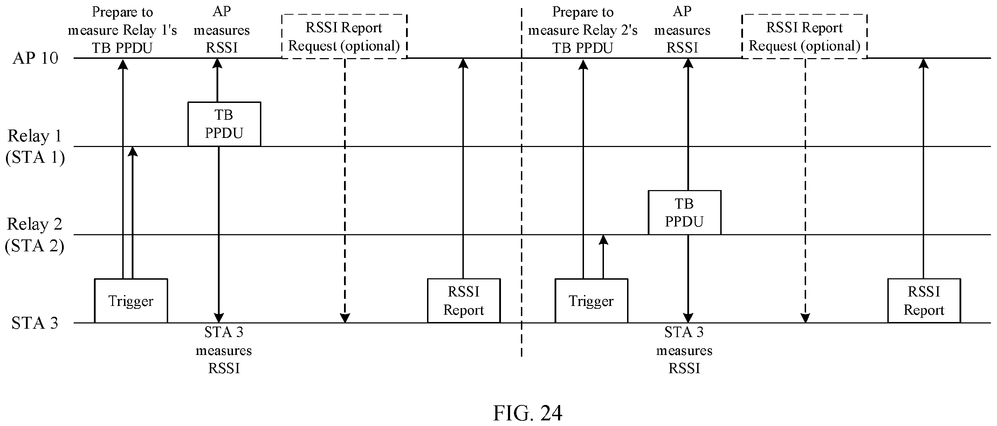

Based on Option 1, the STA3 can also proactively report an RSSI Report between the relay stations and the STA3 to the AP10, or the AP10 can request the STA3 to report the RSSI Report between the relay stations and the STA3 by sending an RSSI Report Request. Thus, the AP10 can obtain the RSSI between the AP10 and the relay stations and the RSSI between the relay stations and the STA3. When the STA3 measures and reports the RSSI between itself and multiple relay stations, the process can also be performed in the following two ways: parallel measurement as shown in FIG. 23 and serial measurement as shown in FIG. 24.

Under Option 2 of Method 3, the relay station is selected by the AP10. Since the RSSI information between the AP10 and the relay stations and the RSSI information between the relay stations and the STA3 are both available at the AP10, the AP10 can select the optimal relay station to serve the STA3 based on a combination of the RSSI between the AP10 and the relay stations and the RSSI between the relay stations and the STA3.

### A.2.2.4 Related Frame Format Design

### a) NDPA Frame Format

The design of the following NDPA frame format is applicable to Method 1, Method 2, and Method 3 of the STA-initiated RSSI measurement and feedback mechanism in Section A.2.2.

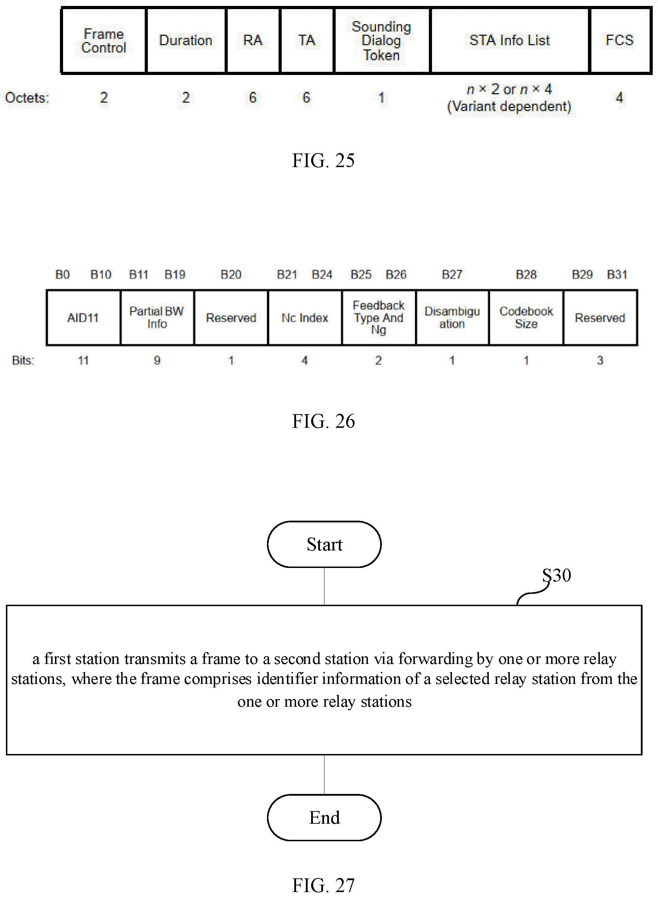

As shown in FIG. 25, the format of a Null Data Packet Announcement (NDPA) frame is illustrated, where a STA Info List field contains one or more STA Info fields.

The format of the STA Info field of an Extremely High Throughput (EHT) NDPA frame is shown in FIG. 26. The NDPA frame contains a STA Info List field, which in turn contains one or more STA Info fields. The STA Info field contains a CSI/RSSI Measurement subfield and a Transmit/Receive (TX/RX) subfield. The CSI/RSSI Measurement subfield is used for indicating whether a Null Data Packet (NDP) frame used by a relay station is for a Channel State Information (CSI) measurement or an RSSI measurement. The TX/RX subfield is used for indicating whether the STA corresponding to the STA Info field is a transmitting end that sends the NDP frame or a receiving end that receives the NDP frame to perform a measurement. The present disclosure proposes that one bit (e.g., B20) of the four reserved bits B20 and B29-B31 be defined as the CSI/RSSI Measurement subfield, and another bit (e.g., B29) be defined as the TX/RX subfield.

The CSI/RSSI Measurement subfield is used to indicate to a peer station whether to use the subsequent NDP frame for a CSI measurement or an RSSI measurement, for example:
1. When the CSI/RSSI Measurement subfield = 1, it indicates that the subsequent NDP frame is used for a CSI measurement.
2. When the CSI/RSSI Measurement subfield = 0, it indicates that the subsequent NDP frame is used for an RSSI measurement.

In addition, the TX/RX subfield is used to indicate whether the STA corresponding to the STA Info field is a transmitting end that sends an NDP frame or a receiving end that receives an NDP frame to perform a measurement, for example:
1. When the TX/RX subfield = 1, it indicates that the STA sends an NDP frame for measurement.
2. When the TX/RX subfield = 0, it indicates that the STA receives an NDP frame to perform a measurement.

### b) Trigger Frame Format

The Trigger frame used for the STA-initiated RSSI measurement can be the same as the Trigger frame used for the AP-initiated RSSI measurement. The design of the Trigger frame in A.2.2 is consistent with the design of the Trigger frame in Section A.2.1.3 and will not be described again.

### c) RSSI Report Request Frame Format

The RSSI Report Request frame format used in the STA-initiated RSSI measurement and feedback mechanism can be the same as the RSSI Report Request frame format used in the AP-initiated RSSI measurement and feedback mechanism. The RSSI Report Request frame format in A.2.2 is consistent with the design of the RSSI Report Request frame in Section A.2.1.3 and will not be described again.

### d) RSSI Report Frame Format

The RSSI Report frame format used in the STA-initiated RSSI measurement and feedback mechanism can be the same as the RSSI Report frame format used in the AP-initiated RSSI measurement and feedback mechanism. The RSSI Report frame format in A.2.2 is consistent with the design of the RSSI Report frame in Section A.2.1.3 and will not be described again.

### A.3 Method for Selecting a Suitable Relay Station

Referring to FIG. 27, a first station transmits a frame (for example, a data frame or a Relay Selection frame) to a second station via forwarding by one or more relay stations, where the frame comprises identifier information of a selected relay station from the one or more relay stations (S30). The first station is an AP or a non-AP station.

In some embodiments of the present disclosure, the frame is a data frame, comprising a sending node address, a receiving node address, a source node address, and a destination node address, where:
the sending node address is set to an address of the first station;
the receiving node address is set to an address of the selected relay station;
the source node address is set to the address of the first station; and
the destination node address is set to an address of the second station.

The data frame is forwarded through the selected relay station, and in the forwarded data frame:
the sending node address is set to the address of the selected relay station;
the receiving node address is set to the address of the second station;
the source node address is set to the address of the first station; and
the destination node address is set to the address of the second station.

In some embodiments of the present disclosure, the frame is a Relay Selection frame, comprising a Relay ID field for indicating identifier information of a device of the selected relay station. A Relay Selection field of the Relay Selection frame comprises one or more Relay ID fields. A relay station corresponding to a Relay ID field with the highest priority is preferentially used as the selected relay station to operate. When the relay station corresponding to the Relay ID field with the highest priority is unable to operate to serve the destination device, a relay station corresponding to a Relay ID field with a next-highest priority operates as a backup to serve the destination device.

The method for selecting a relay station can be divided into two methods: the AP 10 selecting a suitable relay station for a STA, and the STA selecting a suitable relay station for itself. The specific designs are as follows.

### A.3.1 Method for AP to Select a Suitable Relay Station

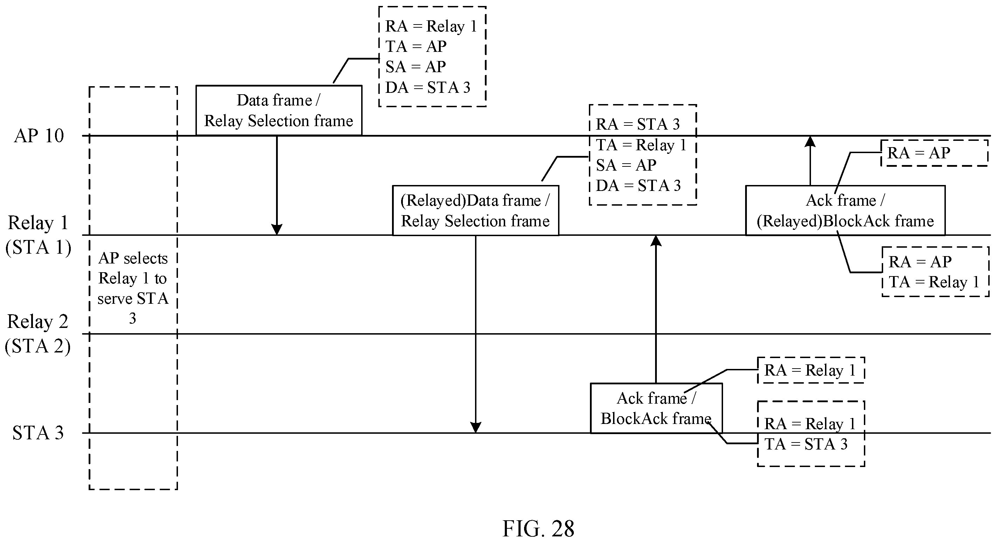

As shown in FIG. 28, the case where the AP 10 selects relay station 1 for STA3 is used as an example for description. In different embodiments, the method for the AP 10 to select other relay stations for STA3 (or other STAs) is similar and will not be detailed further.

The present disclosure proposes an implicit relay station selection method and an explicit relay station selection method. A feature of the implicit relay station selection method is that it is not necessary to explicitly indicate the identifier or address of the relay station to the STA; the STA determines and learns the identifier or address of the relay station based on the address bits (for example, TA and/or SA) of a received frame. A feature of the explicit relay station selection method is that the AP 10 explicitly informs the STA, via a related frame (for example, a Relay Selection frame), of the relay station selected to serve the STA.

It should be noted that TA is the sending node address (transmitting address), which indicates the (MAC) address of the sender of the current frame; RA is the receiving node address (receiving address), which indicates the (MAC) address of the receiver of the current frame; SA is the source node address (source address), which indicates the (MAC) address of the originator of the current frame; and DA is the destination node address (destination address), which indicates the (MAC) address of the destination of the current frame.

In some embodiments of the present disclosure, the frame is a Relay Selection frame, the Relay Selection frame comprises a Relay ID field, and the Relay ID field indicates the identifier information of a device of the selected relay station.

### A.3.1.1 Implicit Method

The implicit method is described using an example where the AP 10 sends a Data frame to STA3. The method for other frames is similar and will not be described individually.
1) In the Data frame of a downlink transmission (i.e., AP 10 to relay station 1 to STA3), the RA indicates the MAC address of the selected relay station 1, and the DA indicates the MAC address of the target STA3.
2) Then, relay station 1 forwards the Data frame sent by the AP 10 to STA3. From the TA field of the Data frame sent by relay station 1, STA3 learns that the AP 10 has selected relay station 1 for it. STA3 will subsequently perform an uplink transmission to the AP 10 through the relay station 1 selected by the AP 10 (i.e., STA3 to relay station 1 to AP 10).
3) In response to the Data frame sent by relay station 1, STA3 sets the RA of an acknowledgement frame (Ack) or a block acknowledgement frame (BlockAck) that it sends to the MAC address of relay station 1.
4) After receiving the responsive Ack frame or BlockAck frame from STA3, relay station 1 confirms that STA3 has received the Data frame that the AP 10 requested it to forward, and then sends an Ack frame or a (forwarded) BlockAck frame to the AP 10. The relay forwarding operation is completed when the AP 10 receives the Ack frame or (forwarded) BlockAck frame sent by relay station 1.

### A.3.1.2 Explicit Method

The explicit method is described by using an example in which the AP 10 sends a Relay Selection frame to STA 3. The frame contains a field for indicating the ID (AID and/or MAC address) of the relay station selected by the AP 10. The specific steps are as follows:
1) In the Relay Selection frame sent by the AP 10 to relay station 1, the RA indicates the MAC address of relay station 1 selected by the AP 10, and the DA indicates the MAC address of the target STA3.
2) Then, relay station 1 forwards the Relay Selection frame sent by the AP 10 to the STA3. From the Relay Address field in the Relay Selection frame sent by relay station 1, the STA3 learns that the AP 10 has selected relay station 1 for it. The STA3 will subsequently perform an uplink transmission to the AP 10 via the relay station 1 selected by the AP 10 (i.e., STA3 to relay station 1 to AP 10).
3) To respond to the Relay Selection frame sent by relay station 1, the STA3 sends an Ack frame with the RA set to the MAC address of relay station 1.
4) After receiving the Ack frame from the STA3, relay station 1 confirms that the STA3 has received the Relay Selection frame that the AP 10 requested to be forwarded, and then sends another Ack frame to the AP 10. The relay forwarding operation is completed when the AP 10 receives the Ack frame sent by relay station 1.

### A.3.2 Method for STA to Select a Suitable Relay Station

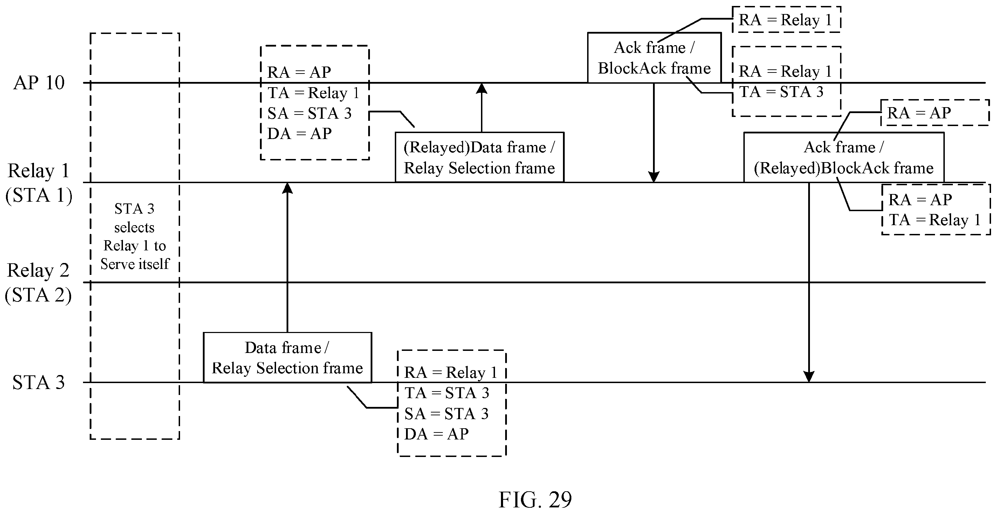

As shown in FIG. 29, the case where STA3 selects relay station 1 is used as an example for description. The method for the STA3 (or other STAs) to select other relay stations is similar and will not be described one by one.

The present disclosure proposes an implicit relay station selection method and an explicit relay station selection method. A feature of the implicit relay station selection method is that it is not necessary to explicitly indicate to the AP 10 the identifier or address of the relay station selected by the STA; the AP 10 automatically learns the identifier or address of the relay based on the address bits (TA and/or SA) of a received frame. A feature of the explicit relay station selection method is that the STA explicitly informs the AP 10, via a related frame (for example, a Relay Selection frame), which device is the relay station used to serve the STA.

### A.3.2.1 Implicit Method

In the implicit method, the case where the STA3 sends a Data frame to the AP 10 is used as an example for description. Other frames can be processed in the same manner and will not be described one by one.
1) In the Data frame of an uplink transmission (i.e., STA3 to relay station 1 to AP 10), the STA3 uses the RA to indicate the MAC address of the selected relay station 1, and uses the DA to indicate the MAC address of the (target) AP 10.
2) Then, relay station 1 forwards the Data frame sent by the STA3 to the AP 10. From the TA field of the Data frame sent by relay station 1, the AP 10 learns that the STA3 has selected relay station 1. The AP 10 will subsequently perform a downlink transmission to the STA3 via the relay station 1 selected by the STA3 (i.e., AP 10 to relay station 1 to STA3).
3) To respond to the Data frame sent by relay station 1, the AP 10 sends an Ack frame or a BlockAck frame, setting the RA of the sent Ack frame or BlockAck frame to the MAC address of relay station 1.
4) After receiving the Ack frame or BlockAck frame from the AP 10, relay station 1 confirms that the AP 10 has received the Data frame that the STA3 requested to be forwarded, and then sends another Ack frame or a (forwarded) BlockAck frame to the STA3. The relay forwarding operation is completed when the STA3 receives the Ack frame or (forwarded) BlockAck frame sent by relay station 1.

### A.3.2.2 Explicit Method

The explicit method is described by using an example in which the STA3 sends a Relay Selection frame to the AP 10. The frame contains a field for indicating the ID (AID and/or MAC address) of the relay station selected by the STA3. The specific steps are as follows.
1) In the Relay Selection frame sent by the STA3 to relay station 1, the RA indicates the MAC address of relay station 1 selected by the STA3, and the DA indicates the MAC address of the (target) AP 10.
2) Then, relay station 1 forwards the Relay Selection frame sent by the STA3 to the AP 10. From the Relay Address field in the Relay Selection frame sent by relay station 1, the AP 10 learns that the STA3 has selected relay station 1. The AP 10 will subsequently perform a downlink transmission to the STA3 via the relay station 1 selected by the STA3 (i.e., AP 10 to relay station 1 to STA3).
3) To respond to the Relay Selection frame sent by relay station 1, the AP 10 sends an Ack frame with the RA set to the MAC address of relay station 1.
4) After receiving the Ack frame from the AP 10, relay station 1 confirms that the AP 10 has received the Relay Selection frame that the STA3 requested to be forwarded, and then sends another Ack frame to the STA3. The relay forwarding operation is completed when the STA3 receives the Ack frame sent by relay station 1.

### A.3.3 Related Frame Format Design and Rules

### a) Data Frame Format Design

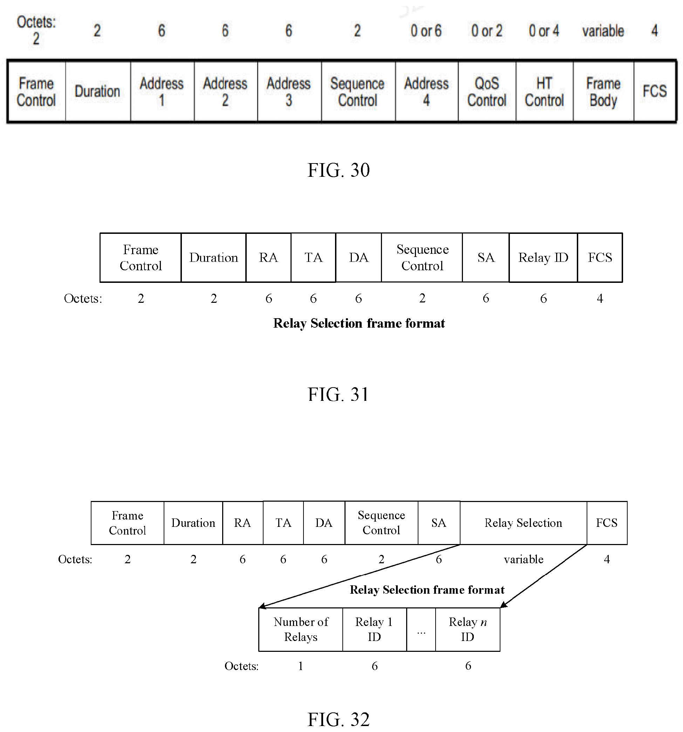

FIG. 30 illustrates a format design for a data frame. The Address 1 field indicates a receiver MAC address (RA), the Address 2 field indicates a transmitter MAC address (TA), the Address 3 field indicates a destination MAC address (DA), and the Address 4 field indicates a source MAC address (SA).

Referring to FIG. 28, the address setting rules are described using the path from AP10 to relay station 1 to STA3 as an example.

In a data frame sent by AP10, the RA indicates the MAC address of relay station 1, the TA indicates the MAC address of AP10, the DA indicates the MAC address of STA3, and the SA indicates the MAC address of AP10.

After relay station 1 receives the data frame sent by AP10, it needs to forward the data frame to the device indicated by the DA (i.e., the MAC address of STA3). The data frame forwarded by relay station 1 is referred to as a (forwarded) data frame. In this (forwarded) data frame, the RA indicates the MAC address of STA3, the TA indicates the MAC address of relay station 1, the DA indicates the MAC address of STA3, and the SA indicates the MAC address of AP10.

After STA3 receives the (forwarded) data frame sent by relay station 1, it knows from the SA that the (forwarded) data frame was initiated by AP10, knows from the TA that the (forwarded) data frame was forwarded by relay station 1 acting as a relay, and knows from the DA that the final destination receiver of the (forwarded) data frame is itself. When STA3 acknowledges the (forwarded) data frame, there are two possible cases:
1) STA3 sends an Ack frame to acknowledge the (forwarded) data frame: The RA of the Ack frame (which has only an RA and no TA, DA, or SA s) is set to the MAC address of relay station 1 (based on the TA of the (forwarded) data frame, it is set to the address indicated by the TA of the (forwarded) data frame). After relay station 1 receives the Ack frame, it also immediately sends an Ack frame to AP10 after an SIFS.
2) STA3 sends a BlockAck frame to acknowledge the (forwarded) data frame: The RA of the BlockAck frame (which has only TA and RA and no DA or SA ) is set to the MAC address of relay station 1 (based on the TA of the (forwarded) data frame, it is set to the address indicated by the TA of the (forwarded) data frame), and the TA is set to the MAC address of STA3 itself. After relay station 1 receives the BlockAck frame, it knows from the TA that the BlockAck frame was sent by STA3, and then it also sends a (forwarded) BlockAck frame to AP10.

### b) Relay Selection Frame Format Design

FIG. 31 and FIG. 32 illustrates format designs for a Relay Selection frame. The RA, TA, DA, and SA fields are designed as previously described. The Relay ID field of the Relay Selection frame in FIG. 31 contains only the ID (e.g., MAC address) information of one relay station, indicating the ID (e.g., MAC address) information of the device selected as the relay station. The Relay Selection frame contains a Relay ID field, used to indicate a device identifier of a selected relay station.

In FIG. 32, the Relay Selection field of the Relay Selection frame contains the ID (e.g., MAC address) information of one or more relay stations, and the specific number is indicated by the Number of Relays subfield.

The Relay Selection field of the Relay Selection frame contains one or more Relay ID fields. The relay station corresponding to the Relay ID field with the highest priority is preferentially selected to operate. When the relay station corresponding to the Relay ID field with the highest priority cannot operate to serve the destination device, the relay station corresponding to the Relay ID field with the next-highest priority operates as a backup to serve the destination device.

The Relay Station 1 to Relay Station n subfields respectively indicate the ID (e.g., MAC address) information of the selected relay station 1 to relay station n. When the Relay Selection frame contains the ID (e.g., MAC address) information of multiple relay stations, the priorities of these relay stations decrease sequentially. The relay station corresponding to the Relay Station 1 field has the highest priority and is first used as the relay station to operate. When a higher-priority relay station cannot operate to serve the STA (e.g., STA3), a lower-priority relay station operates as a backup to serve the STA (e.g., STA3).

### A.4 Relay Channel Sounding and Feedback Method

Notably, the Relay-related RSSI measurement and feedback method in Section A.2 describes how a Relay sends a TB PPDU frame or a NDP frame to have AP10 and/or a STA to measure and obtain the RSSI. Essentially, the same method can be used to obtain channel state information (CSI) by measuring the TB PPDU and/or the NDP frame. Therefore, the channel sounding and feedback method for a Relay is consistent with the Relay-related RSSI measurement and feedback method in Section A.2. For example, Section A.2.2.4 already provides an indication in a NDPA frame, via the CSI/RSSI Measurement subfield, that an RSSI measurement or a CSI measurement is to be performed. For the specific protocol design, reference is made to Section A.2, and details are not repeated herein.

### A.5 BSR Design and Feedback Method for Relay

Since a relay station can be a STA with a relay forwarding function, it may also have its own communication needs. In this case, in the aforementioned scenario, the relay station needs to maintain at least two buffer status reports (BSRs): one for indicating its own BSR when it acts as a STA, and another for indicating the BSR for the STAs (including AP10 and non-AP STAs) served by the relay station. For example, the relay forward the BSR of the STA to AP 10, or the relay forward the BSR of AP 10 for the STA.

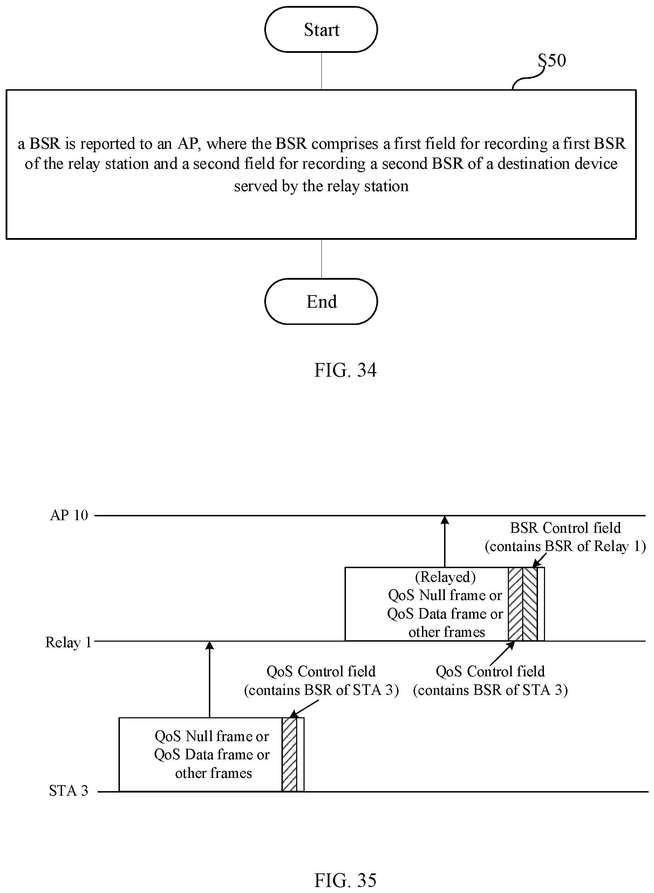

Referring to FIG. 34, in some embodiments of the present disclosure, a BSR is reported to an AP, where the BSR comprises a first field for recording a first BSR of the relay station and a second field for recording a second BSR of a destination device served by the relay station (S50).

In some embodiments of the present disclosure, the first field is a BSR Control field, and the second field is a Quality of Service (QoS) Control field; or
the first field is a Quality of Service (QoS) Control field, and the second field is a Buffer Status Report (BSR) Control field.

In some embodiments of the present disclosure, when a frame associated with the BSR sent by the relay station comprises both a QoS Control field and an HT Control field, and the QoS Control field indicates first BSR information, and the HT Control field indicates second BSR information via an A-Control field, then the first BSR information in the QoS Control field is BSR information of the relay station itself, and the second BSR information indicated by the HT Control field via the A-Control field is BSR information of the destination device of the relay station; or
when a frame associated with the BSR sent by the relay station comprises both a QoS Control field and an HT Control field, and the HT Control field indicates first BSR information, and the QoS Control field indicates second BSR information via an A-Control field, then the first BSR information in the HT Control field is BSR information of the relay station itself, and the second BSR information indicated by the QoS Control field via the A-Control field is BSR information of the destination device of the relay station. The frame associated with the BSR is a Medium Access Control (MAC) frame, and is one of the following according to a Type field and a Subtype subfield of a Frame Control field of the MAC frame: a QoS Data frame, a QoS Null frame, a Control Wrapper frame, or a Management frame.

In some embodiments of the present disclosure, the relay station receives a Buffer Status Report Poll Trigger frame from the AP, and in response to the Buffer Status Report Poll Trigger frame, reports the BSR to the AP, where an information field in the Buffer Status Report Poll Trigger frame indicates the BSR information requested by the AP:
requesting only BSR information of the relay station;
requesting only BSR information of the destination device; or
requesting both the BSR information of the relay station and the BSR information of the destination device.

### A.5.1 BSR Format Design

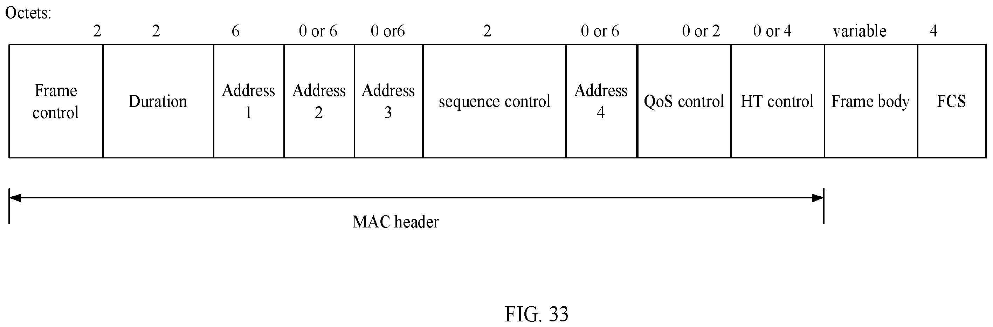

FIG. 33 is a schematic diagram of a MAC frame format. When the Type field of the Frame Control field is 10 (binary, i.e., B3 B2 = 10) and the Subtype subfield is 1000 (binary, i.e., B7 B6 B5 B4 = 1000), this indicates that the MAC frame is a QoS Data type frame. When the Type subfield of the Frame Control field is 10 (binary, i.e., B3 B2 = 10) and the Subtype subfield is 1100 (binary, i.e., B7 B6 B5 B4 = 1100), this indicates that the MAC frame is a QoS Null type frame. A QoS Data frame, a QoS Null frame, and other frames can carry a QoS Control field. In addition, when the +HTC subfield (B15) of the Frame Control field is 1, the MAC frame (e.g., a Control Wrapper frame, a QoS Data frame, a QoS Null frame, and a Management frame) needs to carry an HT Control field. Both the QoS Control field and the HT Control field can be used to carry BSR information. The present disclosure proposes the following rule: when AP10 (or a non-AP STA) receives a frame (e.g., a QoS Data frame, a QoS Null frame, a Control Wrapper frame, or a Management frame) sent by the relay station that comprises both a QoS Control field and an HT Control field, and the QoS Control field indicates first BSR information, and the HT Control field indicates second BSR information via an A-Control field, then AP 10 (or the non-AP STA) considers that the first BSR information in the QoS Control field is the BSR information of the relay station 1 itself, and the second BSR information indicated by the HT Control field via the A-Control field is the BSR information of the destination device (STA3 or AP10) of the relay station 1.

Additionally, the QoS Control field can also be used to carry the BSR information of the STA (or AP), and the HT Control field can be used to carry the BSR information of the relay itself, which will not be described in detail again.

### A.5.2 Method for a Relay Station to Report a BSR

A STA reports a BSR to an AP 10 in two ways. The first way is proactive reporting, as shown in FIG. 35. Specifically, when no request has been made by the AP 10, the STA 3 proactively transmits a frame, such as a QoS Null frame, a QoS Data frame, or other management frames, to the relay station 1. This frame carries a QoS Control field that indicates the BSR information of the STA 3. After receiving the frame carrying the BSR information sent by the STA 3, the relay station 1 performs the following operations:

If the relay station 1 itself also has BSR information to report to the AP 10, the relay station 1 may carry a QoS Control field and a BSR Control field in a frame such as a QoS Null frame, a QoS Data frame, or other management frames. In this case, the QoS Control field indicates the BSR information of the STA 3, and the BSR Control field indicates the BSR information of the relay station 1 itself. After receiving the frame with the BSR information from the relay station 1, the AP 10 can obtain the BSR information of both the STA 3 and the relay station 1, which assists in scheduling subsequent transmissions to the relay station 1 and the STA 3.

If the relay station 1 itself does not have BSR information to report to the AP 10, the relay station 1 may carry a QoS Control field in a frame such as a QoS Null frame, a QoS Data frame, or other management frames, where the QoS Control field indicates the BSR information of the STA 3. After receiving the frame with the BSR information from the relay station 1, the AP 10 can obtain the BSR information of the STA 3, which assists in scheduling subsequent transmissions to the STA 3.

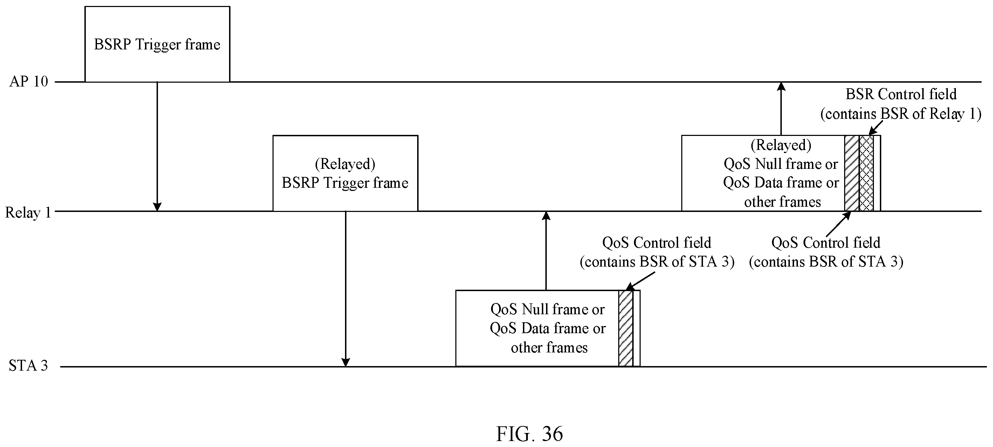

The second way is passive reporting, as shown in FIG. 36. The AP 10 requests the STA 3 and the relay station 1 to report BSR information through a Buffer Status Report Poll (BSRP) trigger frame. A dedicated field may be included in the Common Info field and/or the User Info field of the BSRP trigger frame to indicate the requested BSR information. For example, the field may indicate a request for: 1) only the BSR information of the relay station 1; 2) only the BSR information of the STA 3; or 3) both the BSR information of the relay station 1 and the BSR information of the STA 3.

### A.6 Transmission and Scheduling Method for a Relay Station

The purpose of this section is to coordinate and schedule transmissions between the AP and the relay station, and between the relay station and the STA, thereby achieving efficient transmission.

In Embodiment A.6.1, in a relay transmission schedule initiated by an AP, a data transmission between the AP and the relay station is performed in a first transmission opportunity (TXOP) obtained by the AP, and a data transmission between the relay station and a STA is performed in the first TXOP obtained by the AP, a second TXOP obtained by the AP, or a third TXOP obtained by the relay station.

The data transmission between the AP and the relay station is used for receiving a first data frame from the AP and sending a first acknowledgement frame to acknowledge that the relay station has received the first data frame; the data transmission between the relay station and the STA is used for forwarding the first data frame to the STA and receiving a second acknowledgement frame from the STA to acknowledge that the STA has received the first data frame; and the relay station forwards the second acknowledgement frame to the AP; or

the data transmission between the relay station and the STA is used for receiving a second data frame from the STA and sending a third acknowledgement frame to acknowledge that the relay station has received the second data frame; the data transmission between the AP and the relay station is used for forwarding the second data frame to the AP and receiving a fourth acknowledgement frame from the AP to acknowledge that the AP has received the second data frame; and the relay station forwards the fourth acknowledgement frame to the STA.

In some embodiments of the present disclosure, the relay station shares at least a portion of the time of the first TXOP or the second TXOP obtained by the AP, based on a multi-user request-to-send transmission opportunity sharing (MU-RTS TXS) trigger frame sent by the AP. After receiving the MU-RTS TXS trigger frame, the relay station transmits a clear-to-send (CTS) frame to the AP, and after a short inter-frame space (SIFS), utilizes the at least a portion of the time to perform a transmission.

When the first TXOP or the second TXOP is shared with the relay station as a shared TXOP, and the channel of the shared TXOP is idle for longer than a predetermined duration or the relay station sends a frame to indicate reclamation of the shared TXOP, the remaining time of the shared TXOP is reclaimed by the initiator of the shared TXOP.

In Embodiment A.6.2, in a relay transmission schedule initiated by the STA, a data transmission between the STA and the relay station is performed in a fourth TXOP obtained by the STA, and a data transmission between the relay station and an AP is performed in the fourth TXOP obtained by the STA, a fifth TXOP obtained by the STA, or a sixth TXOP obtained by the relay station.

The data transmission between the STA and the relay station is used for receiving a third data frame from the STA and sending a fifth acknowledgement frame to acknowledge that the relay station has received the third data frame; the data transmission between the relay station and the AP is used for forwarding the third data frame to the AP and receiving a sixth acknowledgement frame from the AP to acknowledge that the AP has received the third data frame; and the relay station forwards the sixth acknowledgement frame to the STA; or
the data transmission between the relay station and the AP is used for receiving a fourth data frame from the AP and sending a seventh acknowledgement frame to acknowledge that the relay station has received the fourth data frame; the data transmission between the STA and the relay station is used for forwarding the fourth data frame to the STA and receiving an eighth acknowledgement frame from the STA to acknowledge that the STA has received the fourth data frame; and the relay station forwards the eighth acknowledgement frame to the AP.

In some embodiments of the present disclosure, the relay station shares at least a portion of the time of the third TXOP or the fourth TXOP obtained by the STA, based on an MU-RTS TXS trigger frame or a TXOP sharing frame sent by the STA. After receiving the MU-RTS TXS trigger frame, the relay station transmits a CTS frame to the STA, and after a SIFS, utilizes at least a portion of the shared time to perform a transmission.

When the fourth TXOP or the fifth TXOP is shared with the relay station as a shared TXOP, and the channel is idle for longer than a predetermined duration during the shared TXOP; or when the relay station sends a frame to indicate reclamation of the shared TXOP, the remaining time of the shared TXOP is reclaimed by the initiator of the shared TXOP.

### A.6.1 AP-initiated Relay Transmission Scheduling

Option 1: After an AP obtains a Transmission Opportunity (TXOP), the transmission between the AP and a relay station and the transmission between the relay station and a STA are scheduled to be completed in the same TXOP.

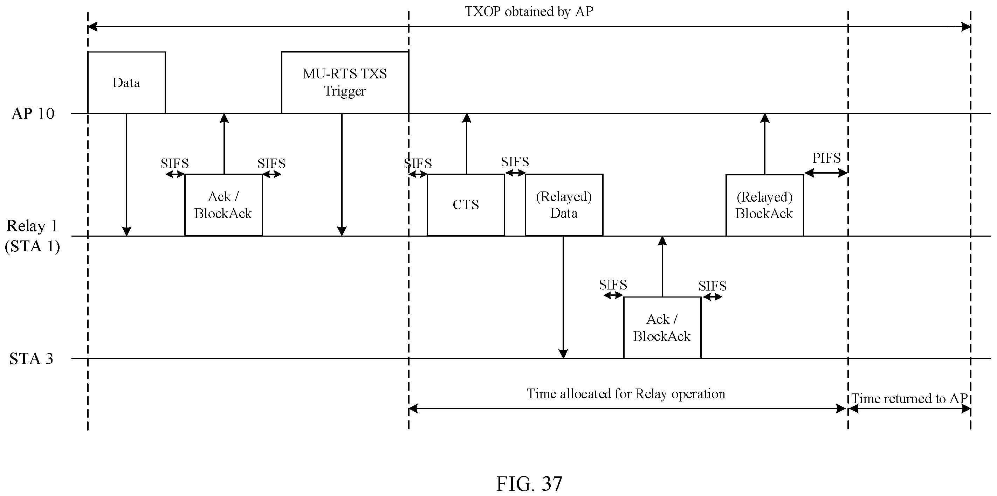

As shown in FIG. 37, after AP10 obtains the TXOP, if AP10 has downlink data to transmit to STA3, it may first send a data frame to relay station 1. Under the existing TXOP protection rules, relay station 1 is allowed to reply with an Ack/BlockAck frame to AP10.

Then, AP10 may send a multi-user request-to-send transmission opportunity sharing (MU-RTS TXS) trigger frame to relay station 1. The purpose is to share a portion (or all) of the time of the TXOP obtained by AP10 with relay station 1, to schedule relay station 1 to relay the data frame sent by AP10 to STA3. After receiving the MU-RTS TXS trigger frame sent by AP10, relay station 1 replies with a Clear to Send (CTS) frame after a SIFS interval. Then, after another SIFS interval, it immediately uses the TXOP shared by AP10 to send a (forwarded) data frame to STA3. Under the TXOP protection rules of the existing TXOP sharing mechanism, STA3 is allowed to reply with an Ack/BlockAck frame to relay station 1. After receiving the Ack/BlockAck frame sent by STA3, relay station 1 then sends an Ack/BlockAck frame to AP10.

If relay station 1 and/or STA3 have no other data to send, and AP10 detects that the channel is idle for longer than a priority inter-frame space (PIFS) duration, AP10 will proactively reclaim the shared TXOP (implicit TXOP reclamation) and continue with other transmissions. Alternatively, relay station 1 may also proactively send a message or a frame to inform AP10 that the TXOP can be reclaimed (explicit TXOP reclamation). FIG. 37 only shows implicit TXOP reclamation, but explicit TXOP reclamation may also be performed, the specific operation of which is not described in detail herein.

It should be noted that this embodiment is applicable to service transmissions with low-latency requirements.

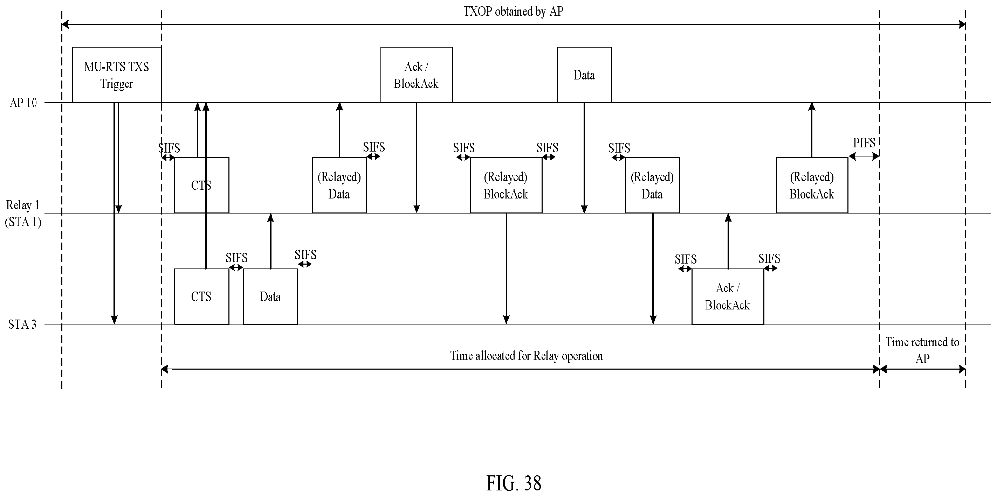

As shown in FIG. 38, after AP10 obtains the TXOP, if it temporarily has no downlink data to transmit (or wants the STA to perform uplink data transmission first), while STA3 has uplink data to transmit, AP10 may directly send an MU-RTS TXS trigger frame to share a portion (or all) of the time of its obtained TXOP with relay station 1 and STA3. After receiving the MU-RTS TXS trigger frame sent by AP10, relay station 1 and STA3 simultaneously reply with CTS frames after a SIFS interval. Then, after another SIFS interval, STA3 may immediately use the TXOP shared by AP10 to send a data frame to relay station 1. After receiving the data frame sent by STA3, relay station 1 may use the TXOP shared by AP10 to send a (forwarded) data frame to AP10. After receiving the (forwarded) data frame sent by relay station 1, AP10 replies with an Ack/BlockAck frame to relay station 1. Then, relay station 1 forwards the Ack/BlockAck frame to STA3, thereby completing the uplink transmission from STA3 to relay station 1 to AP10.

If AP10 has downlink data to transmit to STA3 at this time, it may immediately send a data frame to relay station 1 in the current TXOP. Then, relay station 1 sends (or forwards) the data frame to STA3. STA3 replies with an Ack/BlockAck frame to relay station 1, and then relay station 1 forwards the Ack/BlockAck frame to AP10, thereby completing the downlink transmission from AP10 to relay station 1 to STA3.

If relay station 1 and/or STA3 have no other data to send, and AP10 detects that the channel is idle for longer than a PIFS duration, AP10 will proactively reclaim the shared TXOP (implicit TXOP reclamation) and continue with other transmissions. Alternatively, relay station 1 may also proactively send a message or a frame to inform AP10 that the TXOP can be reclaimed (explicit TXOP reclamation). FIG. 38 only shows implicit TXOP reclamation, but explicit TXOP reclamation may also be performed, the specific operation of which is not described in detail herein.

It should be noted that this embodiment is applicable to service transmissions with low-latency requirements.

Option 2: The transmission between the AP and the relay station and the transmission between the relay station and the STA are completed in different TXOPs (AP shares TXOP with the relay station)
Similar to FIG. 37, AP10 may also schedule the transmission between AP10 and relay station 1 and the transmission between relay station 1 and STA3 to be completed in different TXOPs. This is usually applicable to service transmissions that do not have stringent low-latency requirements.

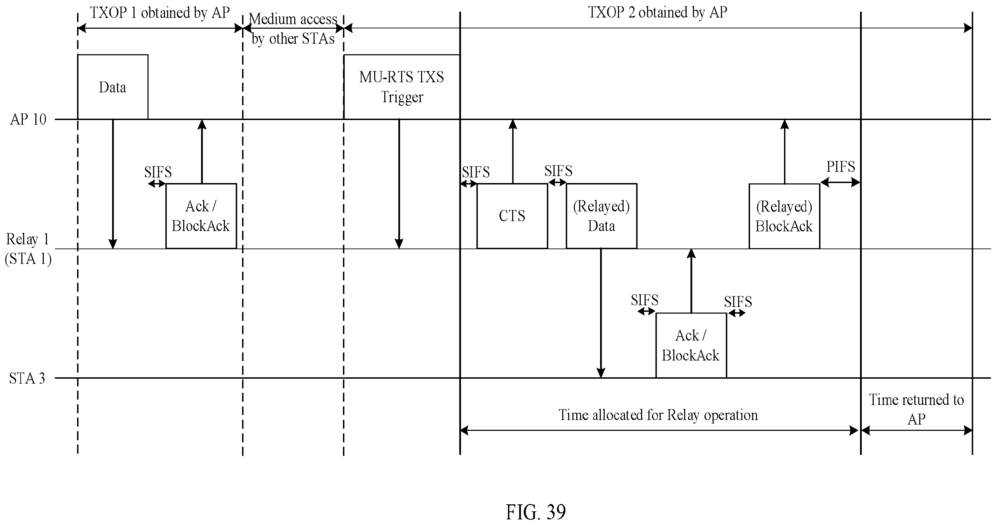

As shown in FIG. 39, the data transmission from AP10 to relay station 1 is completed in TXOP1 obtained by AP10. When AP10 obtains TXOP2, it will share a portion (or all) of the time of TXOP2 with relay station 1, to enable relay station 1 to forward the data sent by AP10 to STA3 and complete the data reception acknowledgement process. The specific details are similar to the description in Option 1 and are not described in detail herein.

It should be noted that the order of TXOP1 and TXOP2 is not limited. For example, AP10 may obtain a first TXOP and first share it with relay station 1 for data transmission between relay station 1 and STA3, and then AP10 may obtain a second TXOP to perform data transmission between AP10 and relay station 1. In addition, FIG. 39 only shows implicit TXOP reclamation, but explicit TXOP reclamation is also possible. For specific details, see Option 1, which are not described in detail herein.

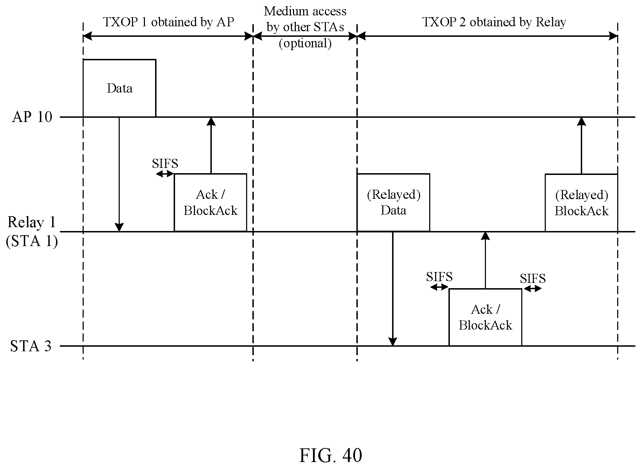

Option 3: Transmission between AP10 and the relay station and transmission between the relay station and the STA are completed in different TXOPs (the relay station obtains its own TXOP)
As shown in FIG. 40, after AP10 obtains TXOP1, it directly sends data to relay station 1, and then relay station 1 uses an Ack/BlockAck frame for acknowlegement. Then, after relay station 1 proactively obtains TXOP2, it relays the data from AP10 to STA3. After STA3 receives the data from AP10 forwarded by relay station 1, it sends an Ack/BlockAck frame. Then, relay station 1 can send the (forwarded) BlockAck frame to AP10 in the current TXOP2. This is usually applicable to service transmissions that do not have low-latency requirements.

It should be noted that the order of TXOP1 and TXOP2 is not limited. It is also possible that relay station 1 obtains the first TXOP to first perform data transmission between relay station 1 and STA3, and then AP10 obtains the second TXOP to perform data transmission between AP10 and relay station 1. In addition, the figure only shows implicit TXOP release, but explicit TXOP release is also possible. For specific details, see Option 1, which are not repeated herein.

### A.6.2 STA-initiated Relay Transmission Scheduling

### Option 1: The STA obtains a TXOP, first completes the transmission between the STA and the relay station, and then shares the TXOP with the relay station to perform the transmission between the relay station and the AP

The premise of this option is that the STA supports the Transmission Opportunity (TXOP) Sharing function. That is, after the STA obtains a TXOP, it can share a portion (or all) of the time of its obtained TXOP with other devices for use via a TXOP Sharing frame or a Multi-User Request-to-Send Transmission Opportunity Sharing (MU-RTS TXS) trigger frame.

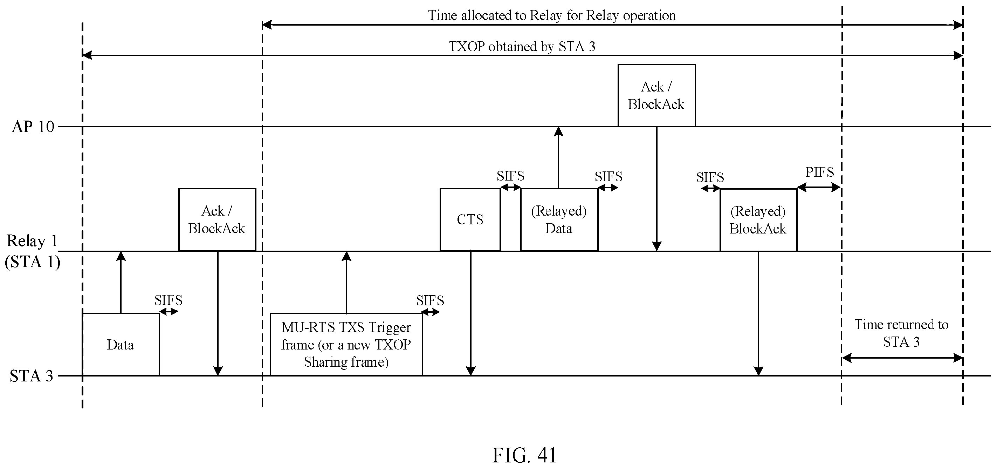

As shown in FIG. 41, after STA3 obtains the TXOP, it first sends the data frame it intends to send to AP10 to relay station 1. Then, relay station 1 uses an Ack/BlockAck frame to acknowledge the data frame sent by STA3.

It should be noted that since relay station 1 cannot directly send a (forwarded) data frame within the TXOP obtained by STA3, the method proposed in this option is required, where STA3 shares a portion (or all) of the time of its obtained TXOP with relay station 1 for use.

Then, STA3 sends a TXOP sharing frame or an MU-RTS TXS trigger frame to relay station 1. Relay station 1 immediately replies with a CT) frame to STA3 after a SIFS. Then, after a SIFS, relay station 1 can send the (forwarded) data frame to AP10. After AP10 receives the data from STA3 relayed by relay station 1, it replies with an Ack/BlockAck frame to relay station 1. Then, relay station 1 forwards the Ack/BlockAck frame from AP10 to STA3.

It should be noted that this option is usually applicable to service transmissions with low-latency requirements. The figure only shows implicit TXOP release, but explicit TXOP release is also possible. For specific details, see Option 1 in section A.6.1, which are not repeated herein.

### Option 2: The STA obtains a TXOP to complete the transmission between the STA and the relay station, and the AP obtains a TXOP and shares it with the relay station to perform the transmission between the relay station and the AP

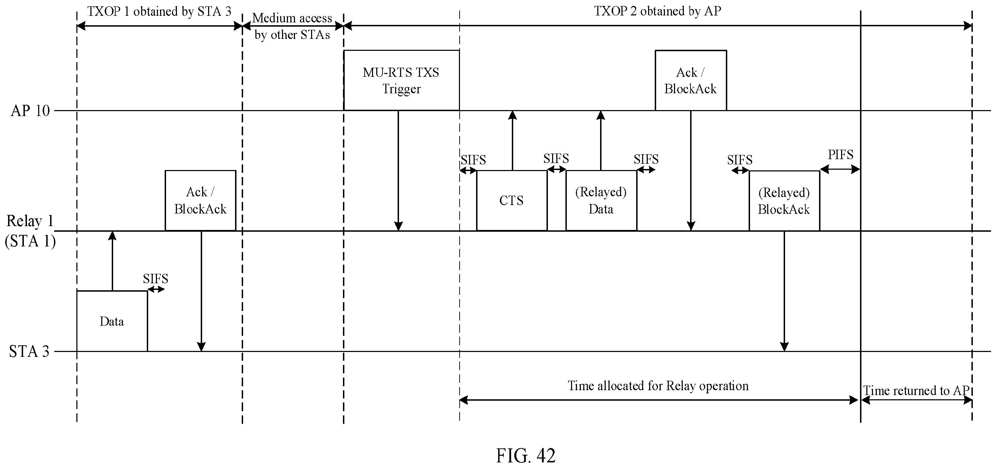

As shown in FIG. 42, after STA3 obtains TXOP1, it sends the data frame it intends to send to AP10 to relay station 1. Then, relay station 1 uses an Ack/BlockAck frame to acknowledge the data frame sent by STA3.

Afterwards, AP10 obtains another TXOP (denoted as TXOP2). AP10 can send an MU-RTS TXS trigger frame to relay station 1, sharing a portion (or all) of the time of the TXOP2 obtained by AP10 with relay station 1. After receiving the MU-RTS TXS trigger frame, relay station 1 immediately replies with a CTS frame to AP10 after a SIFS. Then, after a SIFS, relay station 1 utilizes the TXOP shared by AP10 to immediately send the (forwarded) data frame from STA3 to AP10. After AP10 receives the (forwarded) data frame sent by relay station 1, it sends an Ack/BlockAck frame to acknowledge the (forwarded) data frame. Then, relay station 1 forwards the Ack/BlockAck frame sent by AP10 to STA3.

This option is usually applicable to service transmissions with low-latency requirements. The order of the TXOPs is not limited. For example, AP10 can first obtain the first TXOP and share it with relay station 1 to perform transmission between relay station 1 and STA3, and then STA3 obtains another TXOP on its own to perform transmission between STA3 and relay station 1. In addition, the figure only shows implicit TXOP release, but explicit TXOP release is also possible. For specific details, see Option 1 in section A.6.1, which are not repeated herein.

### Option 3: The STA and the relay station each obtain a TXOP to complete the transmission between the STA and the relay station and the transmission between the relay station and the AP

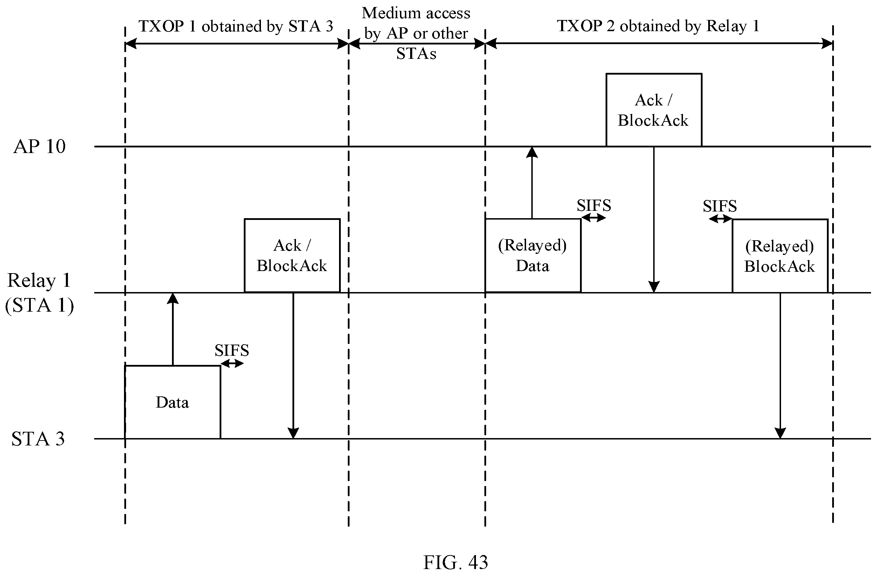

As shown in FIG. 43, after STA3 obtains TXOP1, it directly sends data to relay station 1, and then relay station 1 uses an Ack/BlockAck frame for acknowledgement. Then, after relay station 1 proactively obtains TXOP2, it relays the data from STA3 to AP10. After AP10 receives the data from STA3 relayed by relay station 1, it sends an Ack/BlockAck frame. Then, relay station 1 can send the (forwarded) BlockAck frame to STA3 in the current TXOP2. This is usually applicable to service transmissions that do not have stringent low-latency requirements.

It should be noted that the order of TXOP1 and TXOP2 is not limited. It is also possible that relay station 1 obtains the first TXOP to first perform data transmission between relay station 1 and AP10, and then STA3 obtains the second TXOP to perform data transmission between STA3 and relay station 1. In addition, the figure only shows implicit TXOP release, but explicit TXOP release is also possible. For specific details, see Option 1 in section A.6.1, which are not repeated herein.

### A.6.3 Related Frame Format Design

The formats and rules of the Data frame and the Ack/BlockAck frame involved in this section are consistent with the embodiment in section A.3.3 and do not require a special design. It is only necessary to design the multi-user request-to-send transmission opportunity sharing (MU-RTS TXS) trigger frame and the TXOP sharing frame described in the foregoing solutions.

### a) MU-RTS TXS Trigger Frame Format Design

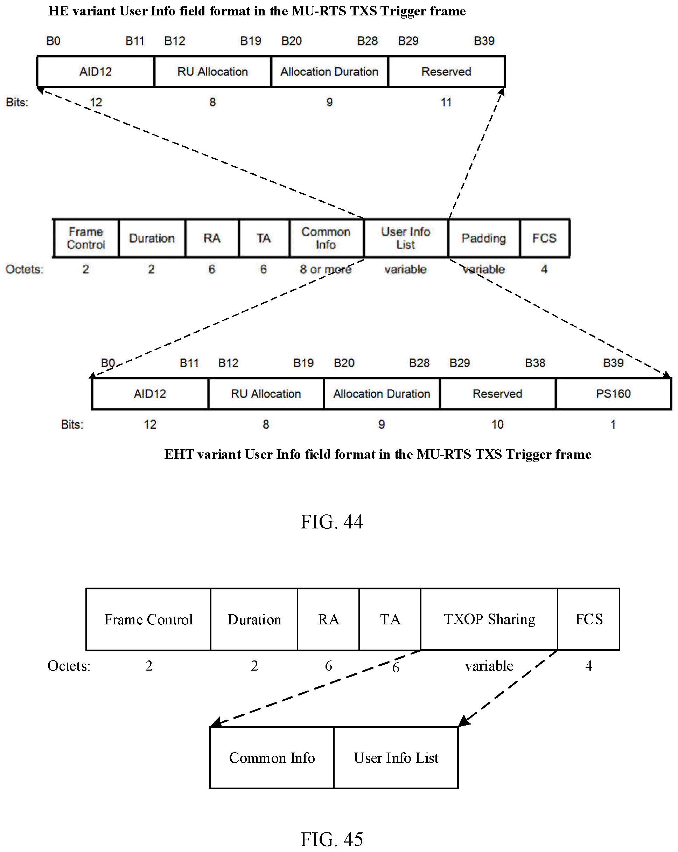

FIG. 44 illustrates the format of an MU-RTS TXS trigger frame, where the UserInfo List may contain one or more User Info fields, and the format of each User Info field may be the HE variant User Info field format or the EHT variant User Info field format shown in the figure.

To implement the scenario in A.6.1 shown in FIG. 37, where AP10 shares a TXOP with relay station 1, AP10 may use an MU-RTS TXS trigger frame with an HE variant User Info field format or an EHT variant User Info field format. The MU-RTS TXS trigger frame comprises a user information list. The User Info field of the user information list is in an HE variant User Info field format or an EHT variant User Info field format, and comprises an AID12 subfield, an RU Allocation subfield, and an Allocation Duration subfield. The AID12 subfield indicates the AID of relay station 1; the RU Allocation subfield indicates the resource unit (RU) within the TXOP shared by the access point AP10 with relay station 1; and the Allocation Duration subfield indicates the duration of the TXOP shared by the access point AP10 with relay station 1. The start of the duration is the end time of the current MU-RTS TXS trigger frame.

To implement the scenario in A.6.2 shown in FIG. 38, where AP10 shares a TXOP with relay station 1 and STA3, AP10 may carry two User Info fields in the User Info List. Each User Info field is in the HE variant User Info field format and/or the EHT variant User Info field format. The AID12 subfield of one User Info field indicates the AID of relay station 1, and the subsequent RU Allocation subfield and Allocation Duration subfield respectively indicate the RU and time resources shared with relay station 1; the AID12 subfield of another User Info field indicates the AID of STA3, and the subsequent RU Allocation subfield and Allocation Duration subfield respectively indicate the RU and time resources shared with STA3.

To implement the scenario in A.6.2 where STA3 shares a TXOP with relay station 1, STA3 may use the HE variant User Info field format or the EHT variant User Info field format. The MU-RTS TXS trigger frame comprises a user information list. The User Info field of the user information list is in an HE variant User Info field format or an EHT variant User Info field format, and comprises an AID12 subfield, an RU Allocation subfield, and an Allocation Duration subfield. The AID12 subfield indicates the AID of relay station 1; the RU Allocation subfield indicates the RU within the TXOP shared by station STA3 with relay station 1; and the Allocation Duration subfield indicates the duration of the TXOP shared by station STA3 with relay station 1. The start of the duration is the end time of the current MU-RTS TXS trigger frame.

### b) TXOP Sharing frame Format Design

Since a STA (e.g., STA 3) is a non-AP STA, it is relatively difficult for the non-AP STA to transmit a MU-RTS TXS Trigger frame. Therefore, a novel TXOP Sharing frame may be designed for the non-AP STA (or the AP), to achieve the same functionality as the MU-RTS TXS Trigger frame. As illustrated in FIG. 45, the TXOP Sharing frame may be transmitted by a non-AP STA or by the AP 10. The purpose of the TXOP Sharing frame is to enable the non-AP STA or the AP 10, after obtaining a TXOP, to share a part (or all) of the resources of the obtained TXOP with one or more other devices via the frame.

It should be noted that the TXOP Sharing frame comprises a Common Info field and a User Info List. The structure, functionality, and definition of the TXOP Sharing frame are consistent with those of the MU-RTS TXS Trigger frame.

The relay station 1 shares at least a portion of time of the third TXOP or the fourth TXOP obtained by the station STA 3, based on the Multi-User Request to Send Transmission Opportunity Sharing (MU-RTS TXS) Trigger frame or the TXOP Sharing frame sent by the station STA 3.

The TXOP Sharing frame comprises a User Info List. A User Info field of the User Info List is in a High Efficiency (HE) variant User Info field format or an Extremely High Throughput (EHT) variant User Info field format, and includes an AID12 subfield, a Resource Unit Allocation (RU Allocation) subfield, and an Allocation Duration subfield. The AID12 subfield indicates an AID of the relay station 1. The RU Allocation subfield indicates resource units (RUs) within the TXOP shared by the station STA 3 with the relay station 1. The Allocation Duration subfield indicates a duration of the TXOP shared by the station STA 3 with the relay station 1.

### A.7 Relay Station Transmission Method Supporting Multi-Link Capability

The 802.11be standard (Wi-Fi 7) already supports multi-link operation (MLO), in which devices are classified according to their capabilities into simultaneous transmit and receive (STR) multi-link devices (MLDs) and non-simultaneous transmit and receive (NSTR) MLDs. This section designs the relay transmission for MLDs.

In some embodiments of the present disclosure, the relay station having multi-link capability performs multi-link relay or forwarding operations, where a first link among the multi-links is used to receive a frame from an AP or transmit a frame to the AP, and a second link among the multi-links is used to receive a frame from a STA or transmit a frame to the STA.. The relay station is a multi-link device (MLD) having simultaneous transmit and receive (STR) capability over multiple links. The method further comprises:
receiving, via the first link, a first data frame transmitted by the AP; and
performing a first simultaneous transmission based on the STR capability, the first simultaneous transmission comprising: transmitting, via the first link, a first acknowledgment frame to the AP for acknowledging receipt of the first data frame; and forwarding, via the second link, the first data frame to the STA.

In some embodiments of the present disclosure, the method further comprises:
performing a first simultaneous reception based on the STR capability, the first simultaneous reception comprising: receiving, via the first link, a second data frame transmitted by the AP; and receiving, via the second link, a second acknowledgment frame transmitted by the STA for acknowledging receipt of the first data frame; and
performing a second simultaneous transmission based on the STR capability, the second simultaneous transmission comprising: transmitting, via the first link, a second acknowledgment frame to the AP for acknowledging receipt of the first data frame; and forwarding, via the second link, the second data frame to the station STA.

In some embodiments of the present disclosure, the method further comprises:
receiving, via the first link or the second link, a third acknowledgment frame transmitted by the STA for acknowledging receipt of the second data frame; and
transmitting, via the first link or the second link, the third acknowledgment frame to the AP for acknowledging receipt of the second data frame.

### A.7.1 STR Relay Forwarding Operation

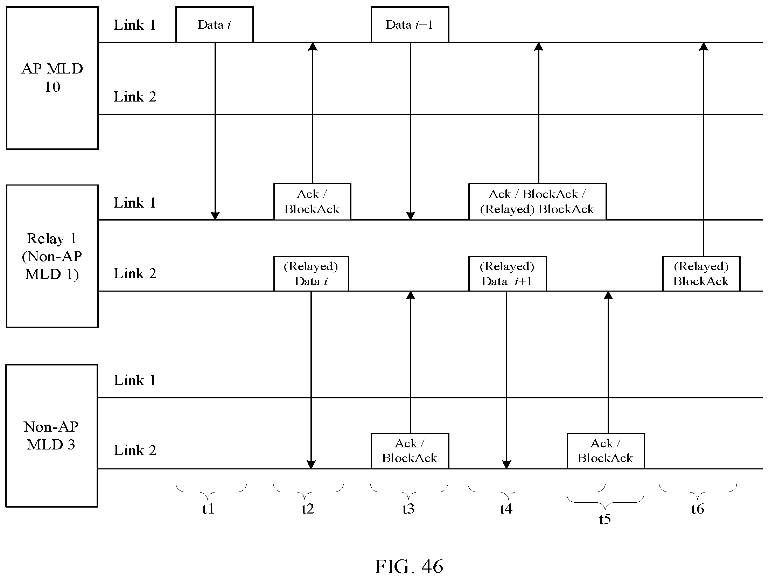

If the relay station is a STR MLD, it can use different links to perform receiving and transmitting operations simultaneously. As shown in FIG. 46, the receiving/transmitting operation between the AP MLD and relay station 1 and the receiving/transmitting operation between relay station 1 and non-AP MLD 3 can be performed simultaneously. The specific operations are as follows:
1) At time t1, AP MLD 10 sends data i to relay station 1 on link 1.
2) At time t2, relay station 1 replies to AP MLD 10 with an Ack/BlockAck frame on link 1; at the same time, relay station 1 can use link 2 to forward data i to non-AP MLD 3.
3) At time t3, non-AP MLD 3 replies to relay station 1 with an Ack/BlockAck frame on link 2 to acknowledge the forwarded data i; at the same time, relay station 1 can also receive data i + 1 sent from AP MLD 10.
4) At time t4, relay station 1 replies to AP MLD 10 with an Ack/BlockAck frame on link 1 to acknowledge the data i + 1 sent by AP MLD 10; at the same time, relay station 1 can also forward the data i + 1 from AP MLD 10 to non-AP MLD 3 on link 2.
5) At time t5, non-AP MLD 3 then sends an Ack/BlockAck frame on link 2 to acknowledge the forwarded data i + 1 sent by relay station 1. It should be noted that because link 1 and link 2 are an STR link pair, relay station 1 can transmit on link 1 while receiving on link 2.
6) At time t6, finally, relay station 1 forwards an Ack/BlockAck frame to AP MLD 10 on link 2, indicating that non-AP MLD 3 has received the data i + 1 from AP MLD 10.

Regarding the Ack/BlockAck/(forwarded) BlockAck, additional rules may be designed. When relay station 1 sends the Ack/BlockAck/(forwarded) BlockAck to AP MLD 10, the following three implementations are possible:

### a) Only acknowledging the data i + 1 sent by AP MLD 10 via an Ack/BlockAck;

Via an Ack/BlockAck/(forwarded) BlockAck, both acknowledging the data i + 1 sent by AP MLD 10 and forwarding the Ack/BlockAck fed back from non-AP MLD 3 after it successfully receives data i, thereby informing AP MLD 10 that non-AP MLD 3 has successfully received the data i forwarded by relay station 1;
Only forwarding, via a (forwarded) BlockAck, the Ack/BlockAck fed back from non-AP MLD 3 after it successfully receives data i + 1, thereby informing AP MLD 10 that non-AP MLD 3 has successfully received the data i + 1 forwarded by relay station 1.

As can be seen, a time interval exists between any two adjacent steps from t1 to t6, for example, a short inter-frame space (SIFS), a PCF inter-frame space (PIFS), or an interval of another duration.

It should be noted that the transmitting/receiving operations on link 1 and link 2 do not have to strictly follow the timing shown in FIG. 46, which is provided only as an example.

### A.7.2 NSTR Relay Forwarding Operation

In some embodiments of the present disclosure, the relay station with multi-link capability performs a multi-link relay or forwarding operation, where a first link of the multi-link is used for receiving a frame from an (AP or transmitting a frame to the AP, and a second link of the multi-link is used for receiving a frame from a STA or transmitting a frame to the STA, characterized in that the relay station is a multi-link device (MLD) with non-simultaneous transmit and receive (NSTR) capability, the method including:
performing a first simultaneous transmission according to the NSTR capability, where the first simultaneous transmission includes: respectively transmitting a synchronization frame for maintaining synchronization/alignment of a physical layer protocol data unit (PPDU) to the AP and the STA;
after a short inter-frame space (SIFS) after transmitting the sync frame, performing a first simultaneous reception according to the NSTR capability, where the first simultaneous reception includes: receiving, via the first link, a first data frame sent from the AP, and receiving, via the second link, a second data frame sent from the STA;
performing a second simultaneous transmission according to the NSTR capability, wherein the second simultaneous transmission includes: sending, via the first link, a first acknowledgement frame to the AP for indicating acknowledgement of receiving the first data frame, and sending, via the second link, a second acknowledgement frame to the STA for indicating acknowledgement of receiving the second data;
performing a third simultaneous transmission according to the NSTR capability, where the third simultaneous transmission includes: forwarding, via the first link, the second data frame sent from the STA to the AP, and forwarding, via the second link, the first data frame sent from the AP to the STA.

In some embodiments of the present disclosure, the method further comprises:
performing a second simultaneous reception according to the NSTR capability, where the second simultaneous reception comprises: receiving, via the first link, a third acknowledgement frame from the AP to acknowledge that the AP has received the second data frame, and receiving, via the second link, a fourth acknowledgement frame from the STA to acknowledge that the STA has received the first data frame; and
performing a fourth simultaneous transmission according to the NSTR capability, where the fourth simultaneous transmission comprises: forwarding, via the first link, the fourth acknowledgement frame from the STA to the AP, and forwarding, via the second link, the third acknowledgement frame from the AP to the STA.

In some embodiments of the present disclosure, the first simultaneous reception and the second simultaneous transmission are separated by a time interval, and the second simultaneous transmission and the third simultaneous transmission are separated by a time interval.

In some embodiments of the present disclosure, the Synchronization frame is a relay request frame or a data frame, where the relay request frame comprises a target identifier field, and the target identifier field is used for indicating the destination device that the relay station is serving in a current relay communication operation.

### A.7.2.1 Method for Simultaneous Uplink and Downlink Transmission on Multiple Links

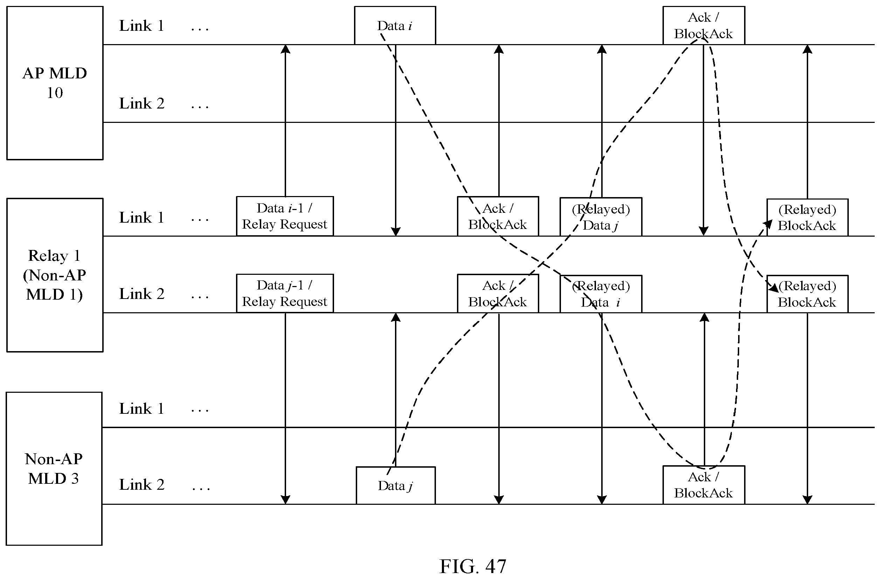

If relay station 1 is an NSTR MLD, it cannot perform receiving and transmitting operations simultaneously on different links; it can only transmit simultaneously or receive simultaneously, as shown in FIG. 47, to avoid transmit/receive interference on the NSTR link pair. The specific operations are as follows:
1) At time t11, before AP MLD 10 and non-AP MLD 3 simultaneously send data i and data j respectively to relay station 1, to maintain PPDU synchronization/alignment, relay station 1 can achieve this by simultaneously sending a newly defined Relay Request frame to AP MLD 10 and non-AP MLD 3 respectively, or by simultaneously sending data i-1 and data j-1 to AP MLD 10 and non-AP MLD 3 respectively.
2) A short inter-frame space (SIFS) after relay station 1 finishes sending the Relay Request frame/Data frame to AP MLD 10 and non-AP MLD 3 respectively, at time t12, AP MLD 10 and non-AP MLD 3 simultaneously send data i and data j respectively to relay station 1.
3) At time t13, relay station 1 replies on link 1 with an Ack/BlockAck frame to AP MLD 10 to acknowledge receipt of data i sent from AP MLD 10 (to be forwarded to non-AP MLD 3); at the same time, relay station 1 can use link 2 to send an Ack/BlockAck frame to non-AP MLD 3 to acknowledge receipt of data j sent from non-AP MLD 3 (to be forwarded to AP MLD 10).
4) At time t14, relay station 1 sends (forwards) data j to AP MLD 10 on link 1; at the same time, non-AP MLD 3 sends (forwards) data i to relay station 1 on link 2.
5) At time t15, AP MLD 10 replies on link 1 with an Ack/BlockAck frame to acknowledge data j forwarded by relay station 1 from non-AP MLD 3; at the same time, non-AP MLD 3 replies on link 2 with an Ack/BlockAck frame to relay station 1 to acknowledge data i forwarded by relay station 1 from AP MLD 10.
6) At time t16, finally, relay station 1 sends a (forwarded) Ack/BlockAck frame on link 1 to AP MLD 10, indicating that non-AP MLD 3 has received data i from AP MLD 10; at the same time, relay station 1 sends a (forwarded) Ack/BlockAck frame on link 2 to non-AP MLD 3, indicating that AP MLD 10 has received data j from non-AP MLD 3.

It can be seen that there is a time interval between any two adjacent steps from step t11 to step t16, for example, a SIFS, a point coordination function inter-frame space (PIFS), or an interval of another duration.

The design of the Relay Request frame format is described as follows:

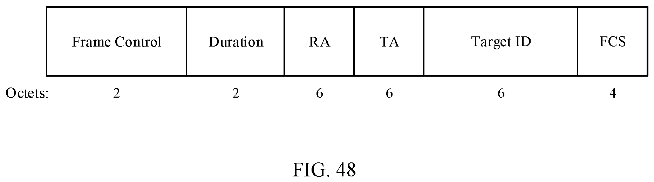

FIG. 48 illustrates a format design for a Relay Request frame. It includes a Target Identifier (Target ID) field used to indicate the destination device (e.g., a STA) that the relay station is serving in the current relay communication operation. The Target ID field can be the association identifier (AID) of the destination device or the MAC address of the destination device. A device (referred to as a source node device) that receives this Relay Request frame learns the address of its destination node device from the Target ID field. If the Target ID field is a reserved value, it indicates that the source node device decides on its own which destination node device to send its data to. After receiving this Relay Request frame, the receiving device should immediately respond by sending a data frame or a related frame after a SIFS time.

### A.7.2.2 Method for Multi-link Time-Division Uplink and Downlink Transmission

In some embodiments of the present disclosure, a relay station with multi-link capability performs a multi-link relaying or forwarding operation, where a first link of the multi-link is used for receiving a frame from an AP or transmitting a frame to the AP, and a second link of the multi-link is used for receiving a frame from a STA or transmitting a frame to the STA, where the relay station is a multi-link device (MLD) with non-simultaneous transmit and receive (NSTR) capability, the method comprising:
performing downlink forwarding or uplink forwarding;
where the downlink forwarding comprises:
   receiving a first data frame from the AP via the first link, and after a first time interval, transmitting a first acknowledgement frame to the AP via the first link for acknowledging that the relay station has received the first data frame;
   after a second time interval, forwarding the first data frame to the STA via the second link, and after a third time interval, receiving a second acknowledgement frame from the STA via the second link for acknowledging that the STA has received the first data frame; and
   after a fourth time interval, forwarding the second acknowledgement frame to the AP via the first link;
   wherein the uplink forwarding comprises:
      receiving a second data frame from the STA via the second link, and after a fifth time interval, transmitting a third acknowledgement frame to the STA via the second link for acknowledging that the relay station has received the second data frame;
      after a sixth time interval, forwarding the second data frame to the AP via the first link, and after a seventh time interval, receiving a fourth acknowledgement frame from the AP via the first link for acknowledging that the AP has received the second data frame; and

In some embodiments of the present disclosure, after an eighth time interval, the fourth acknowledgement frame is forwarded to the STA via the second link.

At least one of the first to eighth time intervals is a short inter-frame space (SIFS) or a priority inter-frame space (PIFS).

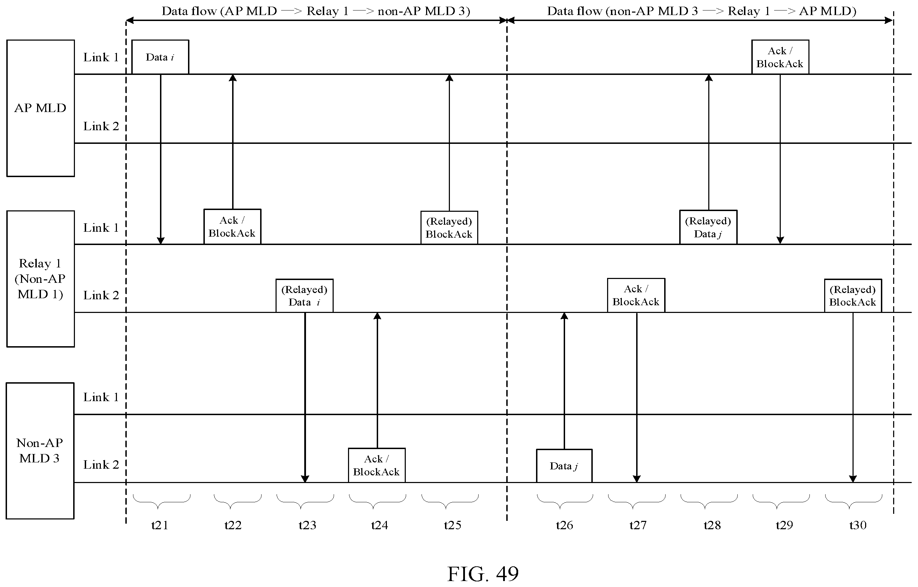

If relay station 1 is an NSTR MLD, it cannot perform receive and transmit operations simultaneously on different links. In addition to the simultaneous multi-link uplink and downlink transmission in section A.7.2.1, it can also first receive on one link (link 1) and then transmit on another link (link 2), as shown in FIG. 49, to avoid NSTR transmit/receive interference. The specific operations are as follows:
1) At time t21, AP MLD 10 sends data i (to be forwarded to non-AP MLD 3) to relay station 1 via link 1. Then, at time t22, relay station 1 immediately replies with an Ack/BlockAck frame on link 1 for acknowledgement.
2) At time t23, relay station 1 sends (forwarded) data i to non-AP MLD 3 on link 2. Then, at time t24, non-AP MLD 3 immediately replies with an Ack/BlockAck frame to relay station 1 on link 2 for acknowledgement.
3) Then, at time t25, relay station 1 forwards the Ack/BlockAck frame received from non-AP MLD 3 to AP MLD 10 on link 1 to acknowledge that non-AP MLD 3 has received data i sent by AP MLD 10.

Through the above steps, AP MLD 10 relays data i to non-AP MLD 3 via relay station 1.
1) At time *t*26, non-AP MLD 3 sends data j (to be forwarded to AP MLD 10) to relay station 1 via link 2. Then, at time t27, relay station 1 immediately replies with an Ack/BlockAck frame on link 2 for acknowledgement.
2) At time t28, relay station 1 sends (forwarded) data j to AP MLD 10 on link 1. Then, at time t29, AP MLD 10 immediately replies with an Ack/BlockAck frame to relay station 1 on link 1 for acknowledgement.
3) Then, at time t30, relay station 1 forwards the Ack/BlockAck frame received from AP MLD 10 to non-AP MLD 3 on link 2 to acknowledge that AP MLD 10 has received data j sent by non-AP MLD 3.

Through the above steps, non-AP MLD 3 relays data j to AP MLD 10 via relay station 1. It can be seen that there is a time interval between any two adjacent steps from step t21 to step t30, for example, a SIFS, a PIFS, or an interval of another duration.

It should be noted that there is no sequential order between the data transmission from AP MLD 10 to non-AP MLD 3 via relay station 1 and the data transmission from non-AP MLD 3 to AP MLD 10 via relay station 1. FIG. 49 is only an example.

FIG. 50 illustrates one or more stations (STAs) 20 and an access point (AP) 10 communicating in a wireless communication system 700, according to an embodiment of the present disclosure. FIG. 50 is illustrative and not limiting, and the system may include more STAs and APs. As shown in FIG. 50, the wireless communication system 700 includes an access point (AP) 10 and one or more stations (STAs) 20. The access point 10 may include a memory 12, a transceiver 13, and a processor 11 connected to the memory 12 and the transceiver 13. The one or more STAs 20 may include a memory 22, a transceiver 23, and a processor 21 connected to the memory 22 and the transceiver 23. The processor 11 or 21 may be configured to implement the functions, procedures, and/or methods described and disclosed in this specification. The radio interface protocol layers can be implemented in the processor 11 or 21. The memory 12 or 22 is operably connected to the processor 11 or 21 and stores various information for operating the processor 11 or 21. The transceiver 13 or 23 is operably coupled to the processor 11 or 21, and the transceiver 13 or 23 transmits and/or receives radio signals.

The processor 11 or 21 may include an Application-Specific Integrated Circuit (ASIC), other chipsets, logic circuits, and/or data processing devices. The memory 12 or 22 may include a read-only memory (ROM), a random-access memory (RAM), a flash memory, a memory card, a storage medium, and/or other storage devices. The transceiver 13 or 23 may include a baseband circuit for processing radio frequency signals. When embodiments of the present disclosure are implemented in software, the techniques described herein can be implemented with modules (e.g., procedures, functions, etc.) that perform the functions described herein. These modules can be stored in the memory 12 or 22 and executed by the processor 11 or 21. The memory 12 or 22 may be internal to the processor 11 or 21, or external to the processor 11 or 21, in which case the memory 12 or 22 may be communicatively coupled to the processor 11 or 21 through various means known in the art. In some embodiments, the processor 21 is configured to perform the methods disclosed in the embodiments of the present disclosure.

Referring to FIG. 51, an embodiment of the present application also provides a chip 700. The chip 700 may correspond to a STA (e.g., STA1, STA2, STA3, and STA 20), a relay station (e.g., relay station 1 and relay station 2), or an AP (e.g., AP 10) in the embodiments of the present application, and the chip 700 can implement the corresponding processes implemented by the foregoing STA, relay station, or AP in the various methods of the embodiments of the present application. The chip 700 includes a processor 701, which can call and run a computer program from a memory to implement the methods in the embodiments of the present application.

Optionally, the chip 700 may also include a memory 702. The processor 701 can call and run a computer program from the memory 702 to implement the methods in the embodiments of the present application.

The memory 702 may be a separate device independent of the processor 701, or may be integrated into the processor 701.

Optionally, the chip 700 may also include an input interface 703. The processor 701 can control the input interface 703 to communicate with other devices or chips, and specifically, can obtain messages or data sent by other devices or chips.

Optionally, the chip 700 may also include an output interface 704. The processor 701 can control the output interface 704 to communicate with other devices or chips, and specifically, can output messages or data to other devices or chips.

An embodiment of the present application also provides a computer program product, including computer program instructions.

Optionally, the computer program product may be applied to a STA (e.g., STA1, STA2, STA3, and STA 20), a relay station (e.g., relay station 1 and relay station 2), or an AP (e.g., AP 10) in the embodiments of the present application, and the computer program instructions cause a computer to perform the corresponding processes implemented by the STA (e.g., STA1, STA2, STA3, and STA 20), the relay station (e.g., relay station 1 and relay station 2), or the AP (e.g., AP 10) in the various methods of the embodiments of the present application. For the sake of brevity, details are not repeated here.

An embodiment of the present application also provides a computer program. Optionally, the computer program may be applied to a STA (e.g., STA1, STA2, STA3, and STA 20), a relay station (e.g., relay station 1 and relay station 2), or an AP (e.g., AP 10) in the embodiments of the present application. When the computer program runs on a computer, the computer program instructions cause the computer to perform the corresponding processes implemented by the STA (e.g., STA1, STA2, STA3, and STA 20), the relay station (e.g., relay station 1 and relay station 2), or the AP (e.g., AP 10) in the various methods of the embodiments of the present application. For the sake of brevity, details are not repeated here.

A person of ordinary skill in the art can appreciate that the units and algorithm steps of the examples described in conjunction with the embodiments disclosed herein can be implemented by electronic hardware, or a combination of computer software and electronic hardware. Whether these functions are performed by hardware or software depends on the particular application and design constraints of the technical solution. A person skilled in the art may use different methods to implement the described functions for each particular application, but such implementation should not be considered to be beyond the scope of the present application.

A person skilled in the art can clearly understand that, for the convenience and brevity of description, the specific working processes of the systems, apparatuses, and units described above can be referred to the corresponding processes in the foregoing method embodiments, and details are not repeated here.

A person of ordinary skill in the art can understand that the foregoing embodiments are specific implementations for implementing the present application, and in practical applications, various changes can be made in form and detail without departing from the spirit and scope of the present application.

## Claims

1. A relay communication method, performed at a station (STA) of a wireless local area network, the method comprising:
transmitting a first request frame to an access point (AP), wherein the first request frame comprises an Extended Capabilities element and/or an Ultra High Reliability (UHR) Relay Capabilities element, the Extended Capabilities element comprises a relay station subfield for indicating whether relay forwarding is supported, and the UHR Relay Capabilities element comprises a UHR relay capability information field.

2. The relay communication method according to claim 1, wherein the method further comprises:
receiving a first response frame from the AP, wherein the first response frame comprises a relay station information element, and wherein the relay station information element indicates relay stations within a current basic service set (BSS).

3. The relay communication method according to claim 1, wherein the relay station information element comprises one or more relay station information fields, and each of the one or more relay station information fields corresponds to UHR relay capability information of a relay station.

4. The relay communication method according to claim 1 or 3, wherein the UHR relay capability information comprises one or more of the following:
an identifier of a relay station: for indicating the relay station associated with the UHR relay capability information field;
a Relay Buffer Size subfield: for indicating a buffer space size for relay supported by the STA when the STA acts as a relay station;
a Multi-hop Support subfield: for indicating whether the STA supports a multi-hop relay operation when the STA acts as a relay station; and
a Relay Specific Channel/Band subfield: for indicating a channel/frequency band dedicated to a relay operation when the STA acts as a relay station.

5. The relay communication method according to claim 1, wherein the first request frame is an Association Request frame or a Probe Request frame.

6. The relay communication method according to claim 1, wherein the first response frame is an Association Request frame, a Probe Response frame, or a Beacon frame.

7. A relay communication method, performed in an access point (AP) of a wireless local area network, the method comprising:
receiving a first request frame transmitted from a station (STA), wherein the first request frame comprises an Extended Capabilities element and/or an Ultra High Reliability (UHR) Relay Capabilities element, the Extended Capabilities element comprises a relay station subfield for indicating whether relay station forwarding is supported, and the UHR Relay Capabilities element comprises a UHR relay capability information field.

8. The relay communication method according to claim 7, wherein the method further comprises:
transmitting a first response frame, wherein the first response frame comprises a relay station information element, and wherein the relay station information element informs the STA of relay stations present in a current basic service set (BSS).

9. The relay communication method according to claim 7, wherein the relay station information element comprises one or more relay station information fields, and each of the one or more relay station information fields corresponds to a UHR relay capability information field of a relay station.

10. The relay communication method according to claim 7 or 9, wherein the UHR relay capability information field comprises one or more of the following:
an identifier of a relay station: for indicating the relay station associated with the UHR relay capability information field;
a Relay Buffer Size subfield: for indicating a buffer space size for relay supported by the STA when the STA acts as a relay station;
a Multi-hop Support subfield: for indicating whether the STA supports a multi-hop relay operation when the STA acts as a relay station; and
a Relay Specific Channel/Band subfield: for indicating a channel/band dedicated to a relay operation when the STA acts as a relay station.

11. The relay communication method according to claim 7, wherein the first request frame is an Association Request frame or a Probe Request frame.

12. The relay communication method according to claim 7, wherein the first response frame is an Association Request frame, a Probe Response frame, or a Beacon frame.

13. A relay communication method, performed in a first station of a wireless local area network, the method comprising:
transmitting, by the first station, a frame for a received signal strength indicator (RSSI) measurement to one or more relay stations;
wherein the frame is a trigger frame for triggering the RSSI measurement of the one or more relay stations, or the frame is a null data packet announcement (NDPA) frame or a null data packet (NDP) frame for providing the RSSI measurement.

14. The relay communication method according to claim 13, wherein the first station is an access point (AP), and the frame is the trigger frame for triggering the one or more relay stations to send a trigger-based physical layer protocol data unit (TB PPDU) according to a resource indication in the trigger frame;
the AP measures an RSSI of the TB PPDU to obtain an RSSI between the AP and a relay station; and
the AP sends an RSSI reporting request frame to request RSSI information from an RSSI measurement between the relay station and a station (STA).

15. The relay communication method according to claim 14, wherein functions of the trigger frame comprise at least one of the followings:
a first trigger frame is used for triggering a first relay station and a second relay station among the one or more relay stations to send the TB PPDU after a preset interval according to the resource indication of the trigger frame;
informing the STA to prepare to receive the TB PPDU and measure the RSSI; and
the first trigger frame and a second trigger frame are serially sent to the first relay station and the second relay station.

16. The relay communication method according to claim 15, wherein the method further comprises:
requesting, by the AP, the STA to directly report RSSI information measured between the one or more relay stations and the STA to the AP; or
requesting, by the AP, the one or more relay stations to forward the RSSI information measured between the one or more relay stations and the STA to the AP.

17. The relay communication method according to claim 16, wherein the AP requests one of the first relay station or the second relay station to forward the RSSI information measured between the first relay station and the STA and the RSSI information measured between the second relay station and the STA to the AP.

18. The relay communication method according to claim 16, wherein:
the AP requests the first relay station to forward the RSSI information measured between the first relay station and the STA to the AP; and
the AP requests the second relay station to forward the RSSI information measured between the second relay station and the STA to the AP.

19. The relay communication method according to claim 13, wherein:
the first station is a non-access point (non-AP) station (STA), the frame comprises the NDPA frame and the NDP frame, and the STA receives an RSSI report obtained from the one or more relay stations measuring the NDP; or
the first station is a non-AP STA, the frame comprises the NDPA frame and the NDP frame, causing the one or more relay stations to send the NDP frame a short inter-frame space (SIFS) after receiving the NDPA frame, and the STA measures the NDP frame to obtain an RSSI report; or
the first station is a non-AP STA, the frame is the trigger frame, causing the one or more relay stations to send a TB PPDU a SIFS after receiving the trigger frame, and the STA measures the TB PPDU to obtain an RSSI report.

20. The relay communication method according to claim 19, wherein an RSSI Report frame carries one or more RSSI reports, each of the RSSI reports corresponds to a transmitting end identifier subfield, a receiving end identifier subfield, and/or an RSSI value subfield, wherein the transmitting end identifier subfield indicates a MAC address or an AID of a device that sends an RSSI measurement frame, the receiving end identifier subfield indicates a MAC address or an AID of a device that receives the RSSI measurement frame and obtains an RSSI, and the RSSI value subfield carries an RSSI value.

21. The relay communication method according to claim 19, wherein the STA selects one of the one or more relay stations based on the RSSI report.

22. The relay communication method according to claim 19, wherein the NDPA frame comprises a station information list field, the station information list field comprises one or more station information fields, a station information field comprises a CSI/RSSI measurement subfield and a transmit/receive subfield, the CSI/RSSI measurement subfield indicates whether an NDP frame used by a relay station is for a channel state information (CSI) measurement or an RSSI measurement, and the transmit/receive subfield indicates whether the STA corresponding to the station information field is a transmitting end that sends the NDP frame or a receiving end that receives the NDP frame to perform a measurement.

23. The relay communication method according to claim 14 or 19, wherein a Common Info field in a frame format of the trigger frame is an HE-variant Common Info field or an EHT-variant Common Info field, and a Trigger Type subfield of the Common Info field in the frame format of the trigger frame indicates whether the trigger frame is an RSSI trigger frame.

24. The relay communication method according to claim 23, wherein:
the Trigger Type subfield being set to a preset first value indicates that the trigger frame is a basic trigger frame; and
the Trigger Type subfield being set to a preset second value indicates that the trigger frame is the RSSI trigger frame.

25. The relay communication method according to claim 14, wherein the RSSI reporting request frame comprises a Requester MAC Address field and a Responder MAC Address field;
the Requester MAC Address field indicates a MAC address of a requester of an RSSI report;
the Responder MAC Address field indicates a MAC address of a responder of the RSSI report;
wherein absence of the Requester MAC Address field indicates that a device sending the RSSI reporting request frame is the requester of the RSSI report;
wherein absence of the Responder MAC Address field indicates that a device receiving the RSSI reporting request frame is the responder of the RSSI report; and
wherein absence of both the Requester MAC Address field and the Responder MAC Address field indicates that the device sending the RSSI reporting request frame is the requester of the RSSI report, and the device receiving the RSSI reporting request frame is the responder of the RSSI report.

26. The relay communication method according to claim 14, wherein the RSSI reporting request frame comprises a single/all relay stations reporting field, and the single/all relay stations reporting field indicates whether a requester of an RSSI report is requesting an RSSI report for a single relay station or for all relay stations in relation to the STA.

27. A relay communication method, performed in a first station in a wireless local area network, the method comprising:
transmitting, by the first station, a frame to a second station via forwarding by one or more relay stations, wherein the frame comprises identifier information of a selected relay station among the one or more relay stations.

28. The relay communication method according to claim 27, wherein the first station is an access point or a non-access point station.

29. The relay communication method according to claim 27, wherein the frame is a data frame, comprising:
a sending node address, a receiving node address, a source node address, and a destination node address;
wherein:
the sending node address is set to an address of the first station;
the receiving address is set to an address of the selected relay station;
the source node address is set to the address of the first station; and
the destination node address is set to an address of the second station.

30. The relay communication method according to claim 29, wherein the data frame is forwarded through the selected relay station, and in the forwarded data frame:
the sending node address is set to the address of the selected relay station;
the receiving node address is set to the address of the second station;
the source node address is set to the address of the first station; and
the destination node address is set to the address of the second station.

31. The relay communication method according to claim 27, wherein the frame is a Relay Selection frame, the Relay Selection frame comprises a Relay ID field, and the Relay ID field indicates identifier information of a device of the selected relay station.

32. The relay communication method according to claim 31, wherein a Relay Selection field of the Relay Selection frame comprises one or more Relay ID fields, a relay station corresponding to a Relay ID field with a highest priority is preferentially used as the selected relay station to operate, and when the relay station corresponding to the Relay ID field with the highest priority is unable to operate, a relay station corresponding to a Relay ID field with a next-highest priority operates as a backup.

33. A relay communication method, performed at a station acting as a relay station in a wireless local area network, the method comprising:
reporting a buffer status report (BSR) to an access point (AP), wherein the BSR comprises a first field for recording a first BSR of the relay station and a second field for recording a second BSR of a destination device served by the relay station.

34. The relay communication method according to claim 33, wherein:
the first field is a BSR Control field, and the second field is a Quality of Service (QoS) Control field; or
the first field is a QoS Control field, and the second field is a BSR Control field.

35. The relay communication method according to claim 33, wherein the relay station receives a Buffer Status Report Poll Trigger frame from the AP, and reports the BSR to the AP in response to the Buffer Status Report Poll Trigger frame;
wherein an information field in the Buffer Status Report Poll Trigger frame indicates BSR information requested by the AP:
requesting only BSR information of the relay station;
requesting only BSR information of the destination device; or
requesting both the BSR information of the relay station and the BSR information of the destination device.

36. The relay communication method according to claim 33, wherein:
when a related frame of the BSR sent by the relay station comprises both a QoS Control field and an HT Control field, and the QoS Control field indicates first BSR information, and the HT Control field indicates second BSR information via an A-Control field, then the first BSR information in the QoS Control field is BSR information of the relay station itself, and the second BSR information indicated by the HT Control field via the A-Control field is BSR information of the destination device of the relay station; or
when a related frame of the BSR sent by the relay station comprises both a QoS Control field and an HT Control field, and the HT Control field indicates first BSR information, and the QoS Control field indicates second BSR information via an A-Control field, then the first BSR information in the HT Control field is BSR information of the relay station itself, and the second BSR information indicated by the QoS Control field via the A-Control field is BSR information of the destination device of the relay station.

37. The relay communication method according to claim 36, wherein the related frame of the BSR is a Medium Access Control (MAC) frame, and is one of the following according to a Type field and a Subtype subfield of a Frame Control field of the MAC frame: a QoS Data frame, a QoS Null frame, a Control Wrapper frame, or a Management frame.

38. A relay communication method, performed at a station acting as a relay station in a wireless local area network, the method comprising:
in a relay transmission schedule initiated by an access point (AP), performing data transmission between the AP and the relay station in a first transmission opportunity (TXOP) obtained by the AP, and performing data transmission between the relay station and a station (STA) in the first TXOP obtained by the AP, a second TXOP obtained by the AP, or a third TXOP obtained by the relay station; or
in a relay transmission schedule initiated by the STA, performing data transmission between a STA and the relay station in a fourth TXOP obtained by the STA, and performing data transmission between the relay station and an AP in the fourth TXOP obtained by the STA, a fifth TXOP obtained by the AP, or a sixth TXOP obtained by the relay station.

39. The relay communication method according to claim 38, wherein the relay station, based on a multi-user request-to-send transmission opportunity sharing (MU-RTS TXS) trigger frame sent by the AP, shares at least a portion of time of the first TXOP or the second TXOP obtained by the AP.

40. The relay communication method according to claim 39, wherein after receiving the MU-RTS TXS trigger frame, the relay station transmits a clear-to-send (CTS) frame to the AP, and after a short inter-frame space (SIFS), utilizes the at least a portion of time to perform a transmission.

41. The relay communication method according to claim 39, wherein:
the data transmission between the AP and the relay station is for receiving a first data frame from the AP and sending a first acknowledgement frame for acknowledging that the relay station has received the first data frame, the data transmission between the relay station and the STA is for forwarding the first data frame to the STA and receiving a second acknowledgement frame from the STA for acknowledging that the STA has received the first data frame, and the relay station forwards the second acknowledgement frame to the AP; or
the data transmission between the relay station and the STA is for receiving a second data frame from the STA and sending a third acknowledgement frame for acknowledging that the relay station has received the second data frame, the data transmission between the AP and the relay station is for forwarding the second data frame to the AP and receiving from the AP a fourth acknowledgement frame for acknowledging that the AP has received the second data frame, and the relay station forwards the fourth acknowledgement frame to the STA.

42. The relay communication method according to claim 39, wherein when the first TXOP or the second TXOP is shared with the relay station as a shared TXOP, and a channel is idle for longer than a predetermined duration during the shared TXOP; or when the relay station sends a frame for indicating to reclaim the shared TXOP, a remaining time of the shared TXOP is reclaimed by an initiator of the shared TXOP.

43. The relay communication method according to claim 39, wherein the MU-RTS TXS trigger frame comprises a user information list, wherein a User Info field of the user information list is in an HE variant User Info field format or an EHT variant User Info field format, the User Info field comprises an AID12 subfield, a resource unit (RU) Allocation subfield, and an Allocation Duration subfield, the AID12 subfield indicates an AID of the relay station; the RU Allocation subfield indicates a resource unit (RU) within the TXOP shared by the AP with the relay station; and the Allocation Duration subfield indicates a duration of the TXOP shared by the AP with the relay station.

44. The relay communication method according to claim 38, wherein the relay station, based on a multi-user request-to-send transmission opportunity sharing (MU-RTS TXS) trigger frame or a TXOP sharing frame sent by the STA, shares at least a portion of time of the third TXOP or the fourth TXOP obtained by the STA.

45. The relay communication method according to claim 44, wherein after receiving the MU-RTS TXS trigger frame, the relay station transmits a clear-to-send (CTS) frame to the STA, and after a short inter-frame space (SIFS), utilizes the shared at least a portion of time to perform a transmission.

46. The relay communication method according to claim 44, wherein:
the data transmission between the STA and the relay station is for receiving a third data frame from the STA and sending a fifth acknowledgement frame for acknowledging that the relay station has received the third data frame, the data transmission between the relay station and the AP is for forwarding the third data frame to the AP and receiving a sixth acknowledgement frame from the AP for acknowledging that the AP has received the third data frame, and the relay station forwards the sixth acknowledgement frame to the STA; or
the data transmission between the relay station and the AP is for receiving a fourth data frame from the AP and sending a seventh acknowledgement frame for acknowledging that the relay station has received the fourth data frame, the data transmission between the STA and the relay station is for forwarding the fourth data frame to the STA and receiving from the STA an eighth acknowledgement frame for acknowledging that the STA has received the fourth data frame, and the relay station forwards the eighth acknowledgement frame to the AP.

47. The relay communication method according to claim 44, wherein when the fourth TXOP or a fifth TXOP is shared with the relay station as a shared TXOP, and a channel is idle for longer than a predetermined duration during the shared TXOP; or when the relay station sends a frame for indicating to reclaim the shared TXOP, a remaining time of the shared TXOP is reclaimed by an initiator of the shared TXOP.

48. The relay communication method according to claim 44, wherein the MU-RTS TXS trigger frame comprises a user information list, the User Info field of the user information list is in an HE variant User Info field format or an EHT variant User Info field format, and comprises an AID12 subfield, an RU Allocation subfield, and an Allocation Duration subfield, wherein the AID12 subfield indicates an AID of the relay station; the RU Allocation subfield indicates a resource unit (RU) within the TXOP shared by the STA with the relay station; and the Allocation Duration subfield indicates a duration of the TXOP shared by the STA with the relay station.

49. The relay communication method according to claim 44, wherein the TXOP sharing frame comprises a user information list, the User Info field of the user information list is in an HE variant User Info field format or an EHT variant User Info field format, and comprises an AID12 subfield, an RU Allocation subfield, and an Allocation Duration subfield, wherein the AID12 subfield indicates an AID of the relay station; the RU Allocation subfield indicates a resource unit (RU) within the TXOP shared by the STA with the relay station; and the Allocation Duration subfield indicates a duration of the TXOP shared by the STA with the relay station.

50. A relay communication method, performed at a station acting as a relay station in a wireless local area network, wherein the relay station having a multi-link capability performs a multi-link relay or forwarding operation, wherein a first link of the multi-link is used for receiving a frame from an access point (AP) or transmitting a frame to the AP, and a second link of the multi-link is used for receiving a frame from a station (STA) or transmitting a frame to the STA, the relay station is a multi-link device (MLD) having a simultaneous transmit and receive (STR) capability on multiple links, and the method comprises:
receiving a first data frame sent from the AP via the first link; and
performing a first simultaneous transmission according to the STR capability, wherein the first simultaneous transmission comprises transmitting, via the first link, a first acknowledgement frame to the AP for indicating acknowledgement of receiving the first data frame, and forwarding, via the second link, the first data frame to the STA.

51. The relay communication method according to claim 50, wherein the method further comprises:
performing a first simultaneous reception according to the STR capability, wherein the first simultaneous reception comprises: receiving, via the first link, a second data frame sent from the AP, and receiving, via the second link, a second acknowledgement frame sent from the STA for indicating acknowledgement of receiving the first data frame; and
performing a second simultaneous transmission according to the STR capability, wherein the second simultaneous transmission comprises: transmitting, via the first link, the second acknowledgement frame for indicating acknowledgement of receiving the first data frame to the AP, and forwarding, via the second link, the second data frame to the STA.

52. The relay communication method according to claim 51, wherein the method further comprises:
receiving, via the first link or the second link, a third acknowledgement frame sent from the STA for indicating acknowledgement of receiving the second data frame; and
transmitting, via the first link or the second link, the third acknowledgement frame for indicating acknowledgement of receiving the second data frame to the AP.

53. A relay communication method, performed at a station acting as a relay station in a wireless local area network, wherein the relay station having a multi-link capability performs a multi-link relay or forwarding operation, wherein a first link of the multi-link is used for receiving a frame from an access point (AP) or transmitting a frame to the AP, and a second link of the multi-link is used for receiving a frame from a station (STA) or transmitting a frame to the STA, wherein the relay station is a multi-link device (MLD) having a non-simultaneous transmit and receive (NSTR) capability, the method comprising:
performing a first simultaneous transmission according to the NSTR capability, wherein the first simultaneous transmission comprises: transmitting a synchronization frame for maintaining synchronization/alignment of a physical layer protocol data unit (PPDU) to both the AP and the STA;
a short inter-frame space (SIFS) after transmitting the synchronization frame, performing a first simultaneous reception according to the NSTR capability, wherein the first simultaneous reception comprises: receiving, via the first link, a first data frame sent from the AP, and receiving, via the second link, a second data frame sent from the STA;
performing a second simultaneous transmission according to the NSTR capability, wherein the second simultaneous transmission comprises: sending, via the first link, a first acknowledgement frame to the AP for indicating acknowledgement of receiving the first data frame, and sending, via the second link, a second acknowledgement frame to the STA for indicating acknowledgement of receiving the second data frame; and
performing a third simultaneous transmission according to the NSTR capability, wherein the third simultaneous transmission comprises: forwarding, via the first link, the second data frame sent from the STA to the AP, and forwarding, via the second link, the first data frame sent from the AP to the STA.

54. The relay communication method according to claim 53, wherein the method further comprises:
performing a second simultaneous reception according to the NSTR capability, wherein the second simultaneous reception comprises: receiving, via the first link, a third acknowledgement frame from the AP for acknowledging that the AP has received the second data frame, and receiving, via the second link, a fourth acknowledgement frame from the STA for acknowledging that the STA has received the first data frame; and
performing a fourth simultaneous transmission according to the NSTR capability, wherein the fourth simultaneous transmission comprises: forwarding, via the first link, the fourth acknowledgement frame sent from the STA to the AP, and forwarding, via the second link, the third acknowledgement frame sent from the AP to the STA.

55. The relay communication method according to claim 53, wherein the first simultaneous reception and the second simultaneous transmission are separated by a time interval, and the second simultaneous transmission and the third simultaneous transmission are separated by a time interval.

56. The relay communication method according to claim 53, wherein the synchronization frame is a relay request frame or a data frame, wherein the relay request frame comprises a target identifier field, and the target identifier field is used for indicating which destination device the relay station is serving as a relay station for under a current relay communication operation.

57. A relay communication method, performed at a station acting as a relay station in a wireless local area network, wherein the relay station having a multi-link capability performs a multi-link relay station/forwarding operation, wherein a first link of the multi-link is used for receiving a frame from an access point (AP) or transmitting a frame to the AP, and a second link of the multi-link is used for receiving a frame from a station (STA) or transmitting a frame to the STA, wherein the relay station is a multi-link device (MLD) having a non-simultaneous transmit and receive (NSTR) capability, the method comprising:
performing a downlink forwarding or an uplink forwarding;
wherein the downlink forwarding comprises:
receiving a first data frame from the AP via the first link, and after a first time interval, transmitting a first acknowledgement frame to the AP via the first link for acknowledging that the relay station has received the first data frame;
after a second time interval, forwarding the first data frame to the STA via the second link, and after a third time interval, receiving a second acknowledgement frame from the STA via the second link for acknowledging that the STA has received the first data frame; and
after a fourth time interval, forwarding the second acknowledgement frame to the AP via the first link;
wherein the uplink forwarding comprises:
receiving a second data frame from the STA via the second link, and after a fifth time interval, transmitting a third acknowledgement frame to the STA via the second link for acknowledging that the relay station has received the second data frame;
after a sixth time interval, forwarding the second data frame to the AP via the first link, and after a seventh time interval, receiving a fourth acknowledgement frame from the AP via the first link for acknowledging that the AP has received the second data frame; and
after an eighth time interval, forwarding the fourth acknowledgement frame to the STA via the second link.

58. The relay communication method according to claim 57, wherein at least one of the first to eighth time intervals is a short inter-frame space (SIFS) or a priority inter-frame space (PIFS).

59. A network node, comprising:
a processor, configured to call and execute a computer program stored in a memory, to cause a device on which the processor is installed to perform the method of any one of claims 1 to 58.

60. A chip, comprising:
a processor, configured to call and execute a computer program stored in a memory, to cause a device on which the processor is installed to perform the method of any one of claims 1 to 58.

61. A computer-readable storage medium, wherein a computer program is stored thereon, wherein the computer program causes a computer to perform the method of any one of claims 1 to 58.

62. A computer program product, comprising a computer program, wherein the computer program causes a computer to perform the method of any one of claims 1 to 58.
